# EUROPEAN PATENT APPLICATION

(11) **EP 2 800 322 A1**
(43) Date of publication of application: **05.11.2014**
(21) Application number: 14162323.1
(22) Date of filing: 28.03.2014
(51) Int. Cl.: H04L 25/14, G06F 13/38, H04L 7/00, G06F 5/06

(54) **Reception apparatus, information processing apparatus and method of receiving data**

(30) Priority: 30.04.2013 JP 2013095064
(71) Applicant: FUJITSU LIMITED, Kawasaki-shi, Kanagawa 211-8588 (JP)
(72) Inventor: Iwatsuki, Ryuji, Kanagawa, 211-8588 (JP)
(74) Representative: Hoffmann Eitle

(57) **Abstract**

A reception apparatus (152) that receives data from a transmission apparatus (172) through a plurality of lanes, the reception apparatus (152) includes a plurality of buffers (153-0 to 153-7) that store received data, each of the plurality of buffers (153-0 to 153-7) being provided for each of the plurality of lanes; a speed difference controller (175) that outputs a first timing signal for adjusting timing among the plurality of lanes, based on a communication speed on the lanes and operational clocks for the transmission apparatus (172) and the reception apparatus (152); a deskew controller (160) that outputs a second timing signal for adjusting a skew among the plurality of lanes; and a controller that adjusts timing for reading the received data from the plurality of buffers (153-0 to 153-7), based on a value of the second timing signal and a difference between a read position for reading the received data from the buffers and a write position for writing the received data to the buffers, in the first timing signal, upon adjusting a frequency difference between the transmission apparatus (172) and the reception apparatus (152).

## Description

### FIELD

The embodiment discussed herein is directed to a reception apparatus, an information processing apparatus, and a method of receiving data.

### BACKGROUND

When serial communications are performed using a plurality of lanes between apparatuses (ports), a transmission circuit in a connecting apparatus divides transmission data into the number of pieces which corresponds to the lane count, and transmits the divided data through each lane. The reception circuit in a connected apparatus restores the data received through each lane.

In the reception circuit, physical coding sublayer (PCS) clocks may be used.

In such a PCS reception circuit, the passing latencies for PCS clock circuits deteriorate in order to reduce the frequency for clocks (pcs_clock) in a PCS clock circuit, depending on the interface (I/F) rate of a bus, such as a system bus.

The latency may further deteriorate due to a first-in first-out buffer (FIFO) that is used for changing clocks from pcs_clock to a clock internal to the apparatus.

In one aspect, the present disclosure is directed to reducing the latency in communications between apparatuses.

Another object of the present disclosure is to provide advantageous effects achieved by each configuration described in embodiments of the disclosure and not attained by conventional techniques.

### SUMMARY

Accordingly, disclosed herein is a reception apparatus that receives data from a transmission apparatus through a plurality of lanes, the reception apparatus including a plurality of buffers that store received data, each of the plurality of buffers being provided for each of the plurality of lanes; a speed difference controller that outputs a first timing signal for adjusting timing among the plurality of lanes, based on a communication speed on the lanes and operational clocks for the transmission apparatus and the reception apparatus; a deskew controller that outputs a second timing signal for adjusting a skew among the plurality of lanes; and a controller that adjusts timing for reading the received data from the plurality of buffers, based on a value of the second timing signal and a difference between a read position for reading the received data from the buffers and a write position for writing the received data to the buffers, in the first timing signal, upon adjusting a frequency difference between the transmission apparatus and the reception apparatus.

Also disclosed herein is an information processing apparatus including a transmission apparatus; and a reception apparatus that receives data from the transmission apparatus through a plurality of lanes; and a speed difference controller that outputs a first timing signal for adjusting timing among the plurality of lanes, based on a communication speed on the lanes and operational clocks for the transmission apparatus and the reception apparatus, the reception apparatus including a plurality of buffers that store received data, each of the plurality of buffers being provided for each of the plurality of lanes; a deskew controller that outputs a second timing signal for adjusting a skew among the plurality of lanes; and a controller that adjusts timing for reading the received data from the plurality of buffers, based on a value of the second timing signal and a difference between a read position for reading the received data from the buffers and a write position for writing the received data to the buffers, in the first timing signal, upon adjusting a frequency difference between the transmission apparatus and the reception apparatus, the transmission apparatus including second buffers that store data to be transmitted in the first timing signal, each of the second buffers being provided for each of the plurality of lanes.

Also disclosed herein is a method of receiving data from a transmission apparatus to a reception apparatus through a plurality of lanes, the method including outputting a first timing signal for adjusting timing among the plurality of lanes, based on a communication speed on the lanes and operational clocks for the transmission apparatus and the reception apparatus; outputting a second timing signal for adjusting a skew among the plurality of lanes; detecting a frequency difference between the transmission apparatus and the reception apparatus; and upon the detecting, adjusting timing for reading the received data from a plurality of buffers that store received data, each of the plurality of buffers being provided for each of the plurality of lanes, based on a value of the second timing signal and a difference between a read position for reading the received data from the buffers and a write position for writing the received data to the buffers, in the first timing signal.

### BRIEF DESCRIPTION OF DRAWINGS

FIG. 1 is a diagram illustrating a configuration of a server including XBs as an example of an embodiment;
FIG. 2 is a diagram illustrating a configuration of an SB as an example of an embodiment;
FIG. 3 is a diagram illustrating a configuration of an IOB as an example of an embodiment;
FIG. 4 is a diagram illustrating a configuration of an XBB as an example of an embodiment;
FIG. 5 is a diagram illustrating a configuration of an XB as an example of embodiment;
FIG. 6 is a diagram illustrating a configuration of a port circuit as an example of an embodiment;
FIG. 7 is a diagram illustrating an oscillator (OSI) and a reception clock in connecting and connected XBs;
FIG. 8 is a diagram illustrating a format of a clock frequency difference compensation pattern in an example of an embodiment;
FIG. 9 is a diagram illustrating a format of a training pattern in an example of an embodiment;
FIG. 10 is a diagram illustrating a configuration of an inter-lane skew adjustment circuit as an example of an embodiment;
FIG. 11 is a diagram illustrating a configuration of an inter-lane skew adjustment circuit as a variation to an embodiment;
FIG. 12 is a diagram illustrating a configuration of a reception circuit as an example of an embodiment;
FIG. 13 is a diagram illustrating a configuration of a transmission circuit as an example of an embodiment;
FIG. 14 is a diagram illustrating a configuration of an elastic buffer and a clock frequency difference compensation pattern and deskew detector as an example of an embodiment;
FIG. 15 is a diagram illustrating an example of a transfer speed difference controller as an example of an embodiment;
FIG. 16 is a diagram illustrating an example of a configuration of a reception controller as an example of an embodiment;
FIG. 17 is a diagram illustrating an example of a configuration of a clock frequency difference compensation pattern unit as an example of an embodiment;
FIG. 18 is a flowchart indicating the operation of a port circuit in an XB on the sending side as an example of an embodiment;
FIG. 19 is a flowchart indicating the operation of a port circuit in XB on the receiving side as an example of an embodiment;
FIG. 20 is a time chart upon a deskew in an elastic buffer as an example of an embodiment;
FIG. 21 is a time chart upon a deskew in a reception controller as an example of an embodiment;
FIG. 22 is a time chart upon a clock frequency difference compensation (hold) after completion of the deskew in an elastic buffer as an example of an embodiment;
FIG. 23 is a time chart upon a clock frequency difference compensation (hold) after completion of the deskew in a reception controller as an example of an embodiment;
FIG. 24 is a time chart upon a clock frequency difference compensation (incremented by two) after completion of the deskew in an elastic buffer as an example of an embodiment;
FIG. 25 is a time chart upon a clock frequency difference compensation (incremented by two) after completion of the deskew in a reception controller as an example of an embodiment;
FIG. 26 is a diagram illustrating a configuration of a port circuit including conventional elastic buffers, without employing elastic buffers as an example of an embodiment of the present disclosure;
FIG. 27 is a diagram illustrating a configuration of a reception circuit including conventional elastic buffers, without employing elastic buffers as an example of an embodiment of the present disclosure; and
FIG. 28 is a diagram illustrating a configuration of a transmission circuit including conventional elastic buffers, without employing elastic buffers as an example of an embodiment of the present disclosure.

### DESCRIPTION OF EMBODIMENT(S)

Hereinafter, a reception apparatus, an information processing apparatus, and a method of receiving data according to exemplary embodiments will be described with reference to drawings. However, the following exemplary embodiments are merely illustrative, and not intended to exclude various modifications and applications of the techniques that are not specified in the embodiments. That is, the embodiments may be modified in various ways (for example, combination of embodiments and each modification) and implemented without departing from the spirit and scope of the invention.

Hereinafter, an example of the present embodiment will be described with reference to the drawings.

### (A) Configuration

The configuration of an example of the present embodiment will be described.

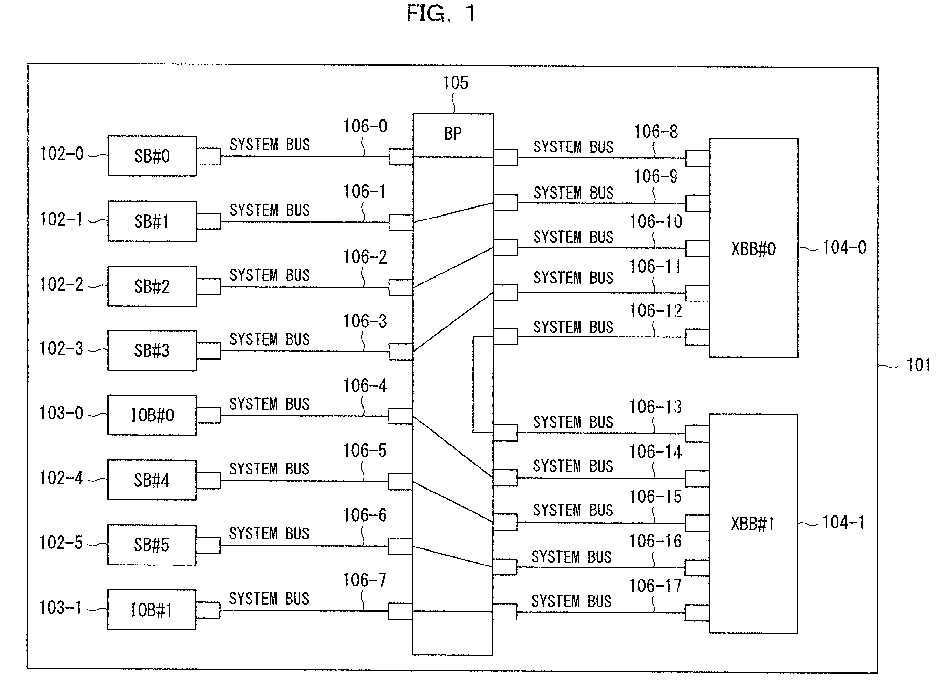

FIG. 1 is a diagram illustrating a configuration of a server 101 including cross bars (XBs) as an example of an embodiment.

A server 101 is an information processing apparatus. The server 101 includes a system boards (SBs) 102-0 through 102-5 (SBs #0 through #5), IO boards (IOB) 103-0 and 103-1 (IOB #0 and #1), cross bar boards (XBBs) 104-0 and 104-1 (XBBs #0 and #1), and a back plane board (BP) 105.

Note that, hereinafter, as reference symbols referring to elements in an example of an embodiment, reference symbols ××-0 through ××-n (reference numeral followed by hyphen '-' and number) will be used when referring to a particular one of a plurality of elements). When referring to a certain element in the plurality of element, the reference symbol xx for referring to that element including only numerals will be used.

For example, when referring to system board(s) in FIG. 1, reference symbols 102-0 through 102-5 will be used when a reference is made to a particular ones of a plurality of system boards, while reference symbol 102 is used when referring to any one of the system boards.

An SB 102 is a substrate provided with a central processing units (CPU), a DRAM (dynamic random access memory), and the like, and performing various processes in the server 101, as described later.

An IOB 103 is a substrate provided with a connector for connection to a local area network (LAN), a hard disk device (HDD), and the like.

An XBB 104 is a substrate provided with a crossbar switch for mutual connection to the SB 102 and the IOB 103, and connecting devices connected to that XBB 104.

The BP 105 is a substrate for mutual connection of the SB 102, the IOB 103, and the XBB 104 through a connector (not illustrated).

The system buses 106-0 through 106-17 provide connections between an SB and XBB, an IOB and an XBB, and an XBB and an XBB via BP 105. The system buses 106-0 through 106-17 are multilane serial buses.

When the CPU on the SB 102 accesses the DRAM of another SB, a packet is transmitted through the XBB 104 using the system bus 106. Similarly, when a gigabit Ethernet^{®} (GbE) controller on the IOB 103 accesses the DRAM on the SB 102, a packet is transmitted through the XBB 104 using the system bus 106.

For example, when an SB 102-0 accesses an SB 102-1, a packet is transmitted from the SB 102-0 through the SB 102-1 through an XBB 104-0.

When the SB 102-0 accesses an SB 102-4, a packet is transmitted from the SB 102-0 through the SB 102-4 through the XBB 104-0 and the XBB 104-1.

Upon a transmission and a reception of a packet, the access latency increases in the transmission through the XBB 104. Therefore, a lower packet passage latency is required for a crossbar switch (XB) and the like, provided into the XBB 104.

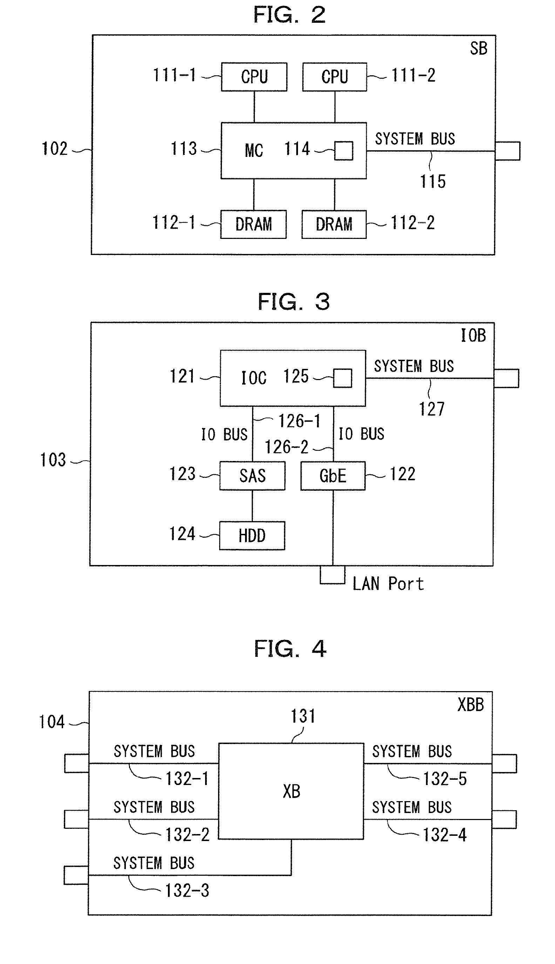

FIG. 2 is a diagram illustrating a configuration of an SB as an example of an embodiment.

The SB 102 includes CPUs 111-1 to 111-2, DRAMs 112-1 to 112-2, and a memory controller (MC) 113.

A CPU 111 is a central processing unit, and performs various processes on the SB 102.

The MC 113 reads and writes data from and to DRAM 112, and performs various controls, such as refreshing control. The MC 113 is connected to the XBB 104 by the system bus 115 through the BP 105.

The MC 113 includes a port unit 114 having a transmission circuit and a reception circuit (both not illustrated), wherein the transmission circuit transmits data to the system bus 115, and the reception circuit receives the data from the system bus 115.

The MC 113 controls access to DRAM 112 in the SB 102, the DRAM 112 in another SB 102, a GbE controller in the IOB 103, or a serial attachment SCSI controller, according to a packet transmitted from the CPU 111.

FIG. 3 is a diagram illustrating a configuration of an IOB as an example of an embodiment.

The IOB 103 includes an IOC 121, a GbE controller 122, a serial attachment SCSI (SAS) controller 123, and a hard disk drive (HDD) 124.

The IOC 121 is an IO controller. The IOC 121 is connected to the GbE controller 122 and the SAS controller 123 respectively through the IO buses 126-1 and 126-2.

The IOC 121 is connected by a system bus to the XBB 104 through the BP 105.

The IOC 121 includes a port unit 125 having a transmission circuit and a reception circuit, wherein the transmission circuit transmits data to a system bus, and the reception circuit receives the data from the system bus.

The GbE controller 122 performs communications through the GbE, and has a LAN port.

The SAS controller 123 performs serial communications and is connected to the HDD 124.

FIG. 4 is a diagram illustrating a configuration of an XBB 104 as an example of an embodiment.

The XBB 104 includes an XB 131.

The XB 131 is a crossbar switch for dynamically selecting a route of data. The XB 131 is connected to other XBB 104, the SB 102, or the IOB 103 through the system buses 132-1 to 132-5.

The XB 131 receives a packet transfer from the SB 102 and the like, recognizes the destination included in the header of the packet, and performs routing to a destination.

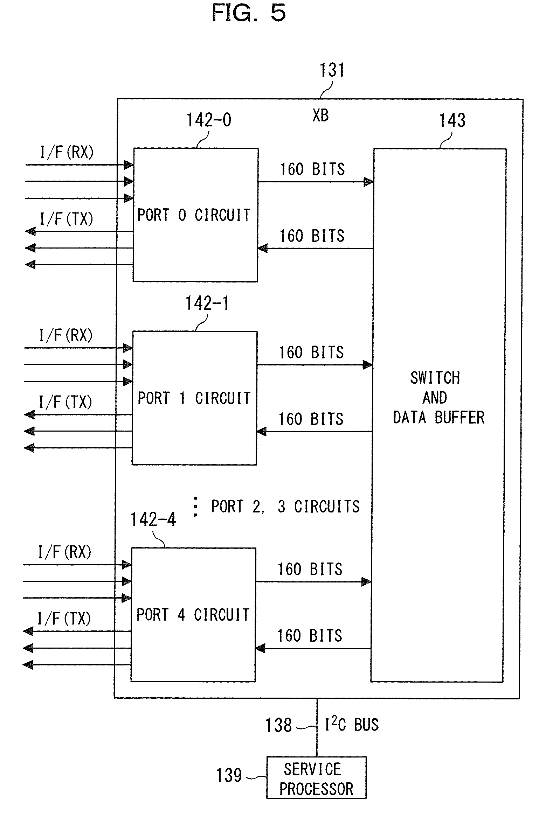

FIG. 5 is a diagram illustrating a configuration of an XB 131 as an example of an embodiment.

The XB 131 is the large scale integration (LSI) provided in the XBB 104. The XB 131 includes port circuits 142-0 through 142-4 and a switch and data buffer 143. The buffer 143 may also include a data buffer (not illustrated).

A port circuits 142 performs a protocol control on the system bus.

The switch and data buffer 143 receives a packet from any of the port circuits 142, and outputs the packet to the port unit 142 specified as the destination of the packet in that packet.

The XB 131 is also connected to a service processor 139 via an Inter-Integrated Circuit (I²C) bus 138. The service processor 139 sets an I/F speed and a core_clock for the XB 131.

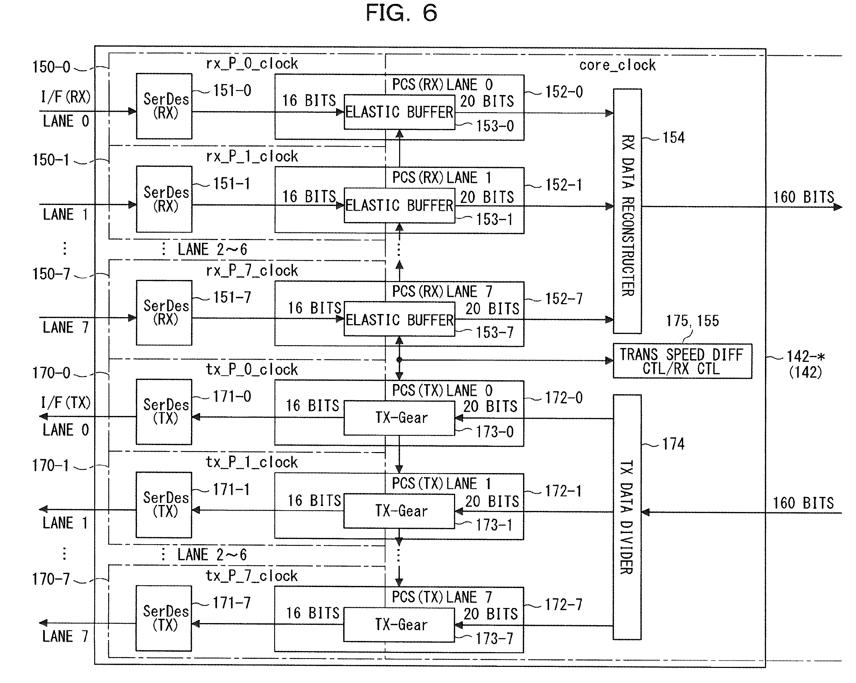

FIG. 6 is a diagram illustrating a configuration of a port circuit (reception apparatus) 142 depicted in FIG. 5.

As depicted in FIG. 6, a transmission I/F (I/F (TX)) and a reception I/F (I/F (RX)) are connected to each of the port circuits 142.

In this example, the number of ports are 5, namely, ports 0-4 (see FIG. 5), while the number of lanes is eight, namely, lanes 0-7 (see FIG. 6).

In the following description and corresponding drawings, asterisk (*) symbol is used to denote any one of the lanes 0-7.

Furthermore, the letter "m" is used to denote any of the lanes 0-7. Hence, a reception lane block 150-m and a transmission lane block 170-m connected to lane m (m = 0-7) is referred to as a "lane m receiver" and a "lane m transmitter".

In the following description and corresponding drawings, the letter "p" included in any signal names represent any of the port 0 through 4. For example, the received clock signal rx_p_0_clock is rx_0_0_clock when denoting a received clock signal in the lane 0 in Port 0.

Each port circuit 142 includes lane m receivers 150-0 through 150-7, a reception data restore unit 154, lane m transmitters 170-0 through 170-7, a transmission data divider 174, a transfer speed difference controller (speed difference controller) 175, and a reception controller 155. Note that a transfer speed difference controller 175 and a reception controller 155 are depicted as a single unit in FIG. 6, for the same of brevity.

A lane m receiver 150 receives data from its corresponding lane in the system bus.

Each lane m receiver 150 includes deserializers (SerDes (RX)) 151-0 through 151-7 and elastic buffers 153-0 through 153-7.

A deserializer 151 converts received 1-bit width serial data into 16-bit width parallel data.

An elastic buffer 153 is an FIFO buffer for storing reception data and absorbs a clock frequency difference between connecting and connected apparatuses.

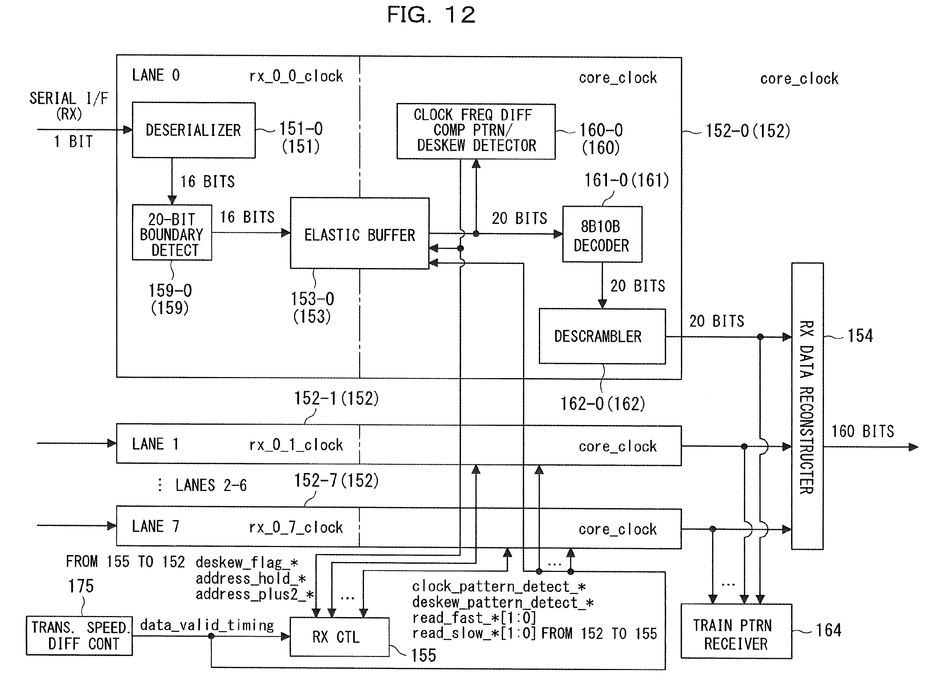

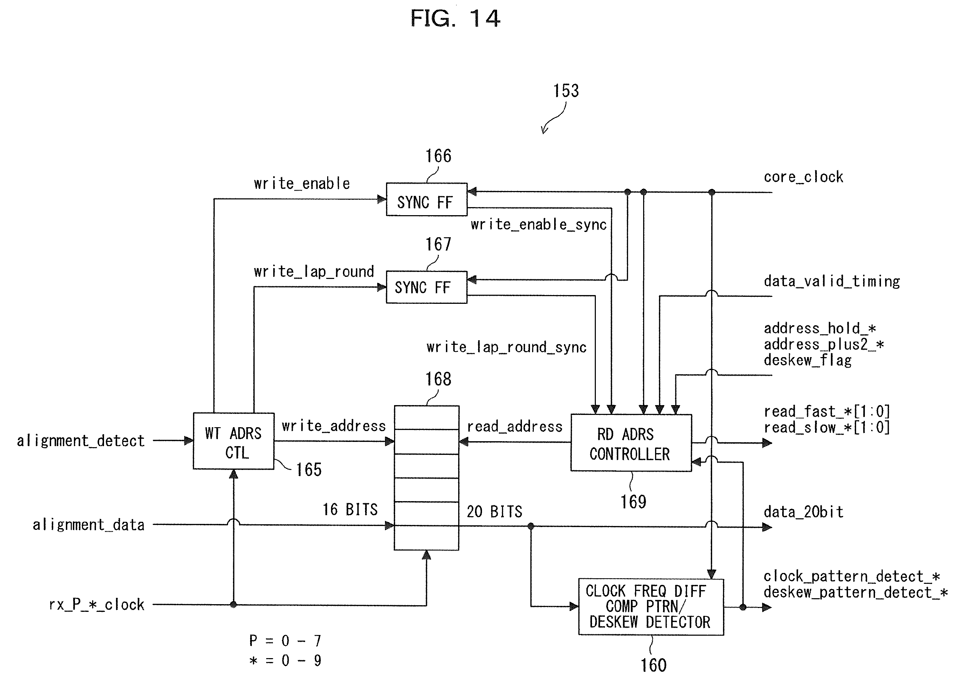

An elastic buffer 153 increments a write address by one in every cycle, while incrementing a read address by one in accordance with a signal from a transfer speed difference controller 175 (see FIG. 12). In response to detecting a frequency difference compensation pattern, the elastic buffer 153 holds, increments by one, or increments by two a read address, in accordance with a signal from a clock frequency difference compensation pattern and deskew detector (deskew controller) 160 (see FIG. 12) and a signal from a reception controller 155 (see FIG. 12). The detailed configuration of the elastic buffers 153 will be described later with reference to FIG. 14.

The reception data restore unit 154 combines a plurality of (8 in the example in the drawing) pieces of 20-bit data received by each lane m receiver 152 to restore 160-bit reception data.

A lane m transmitter 170 transmits data to the corresponding lane in the system bus.

A lane m transmitter 170 includes serializers (SerDes (TX)) 171-0 through 171-7, transmission circuits 172-0 through 172-7, and a transmission data divider 174.

A serializer 171 generates 1-bit width serial data from 16-bit width parallel data that is sent.

Each of the transmission circuits 172-0 through 172-7 includes transmission gear boxes (TX-Gear; gear boxes) 173-0 through 173-7.

A transmission gear box 173 is an FIFO for storing transmission data.

The transmission data divider 174 divides 160-bit transmission data into a plurality of (8 in the example in the drawing) pieces of 20-bit data for outputting them to the respective transmission circuits 172.

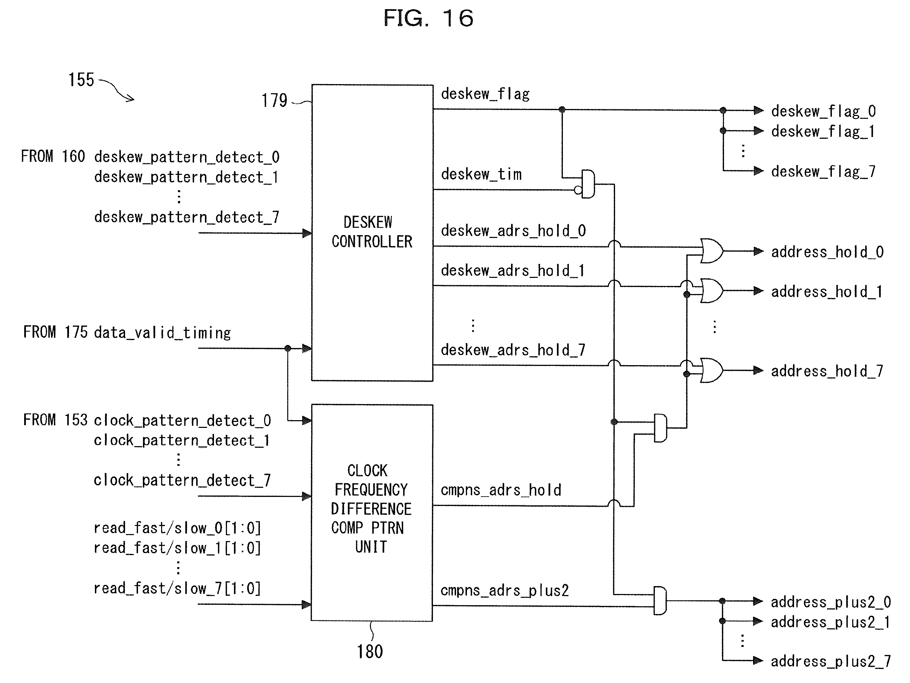

The transfer speed difference controller 175 generates a 1-bit data_valid_timing signal (first timing signal), for example, that indicates valid timing for writing to a transmission gear box 173 or reading from an elastic buffer 153. The detailed configuration of the transfer speed difference controller 175 will be described later with reference to FIG. 16.

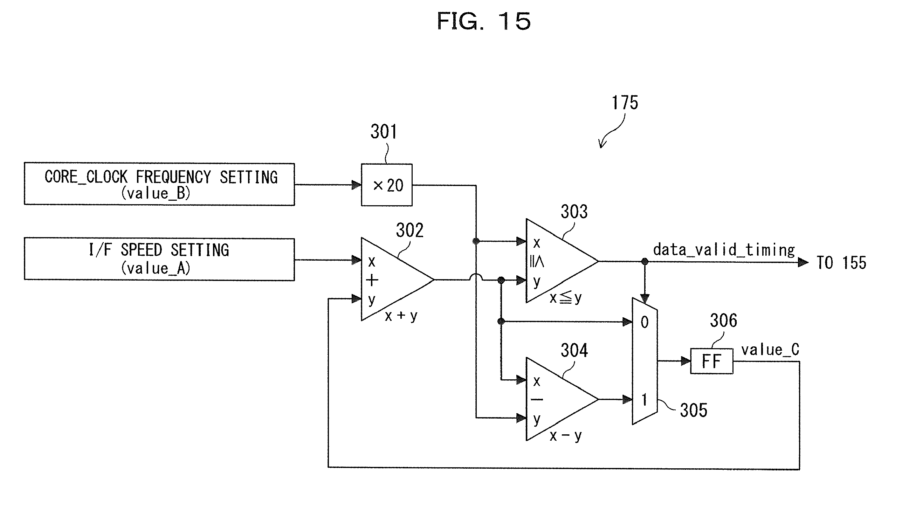

The reception controller 155 receives the data_valid_timing signal and signals from the elastic buffer 153-0 through 153-7 which will be described later, and outputs signals that controls values of read pointers (read_pointer) for the elastic buffers 153-0 through 153-7. The detailed configuration of the reception controller 155 will be described later with reference to FIG. 15.

Note that a clock core_clock signal depicted in FIG. 6 is a 1-bit clock signal used in the LSI of a XB 131 and operates at 0.8 GHz, for example, independent of the I/F speed. Reception and transmission clocks rx_p_*_clock and tx_p_*_clock in the lanes 0-7 in FIG. 6 operate at the rate that is one 16th of the I/F transfer speed, for example.

As described above, the I/F speed and the core_clock are set by the service processor (see FIG. 5).

Note that long dashed short dashed lines in FIG. 6 indicate clock domain boundaries.

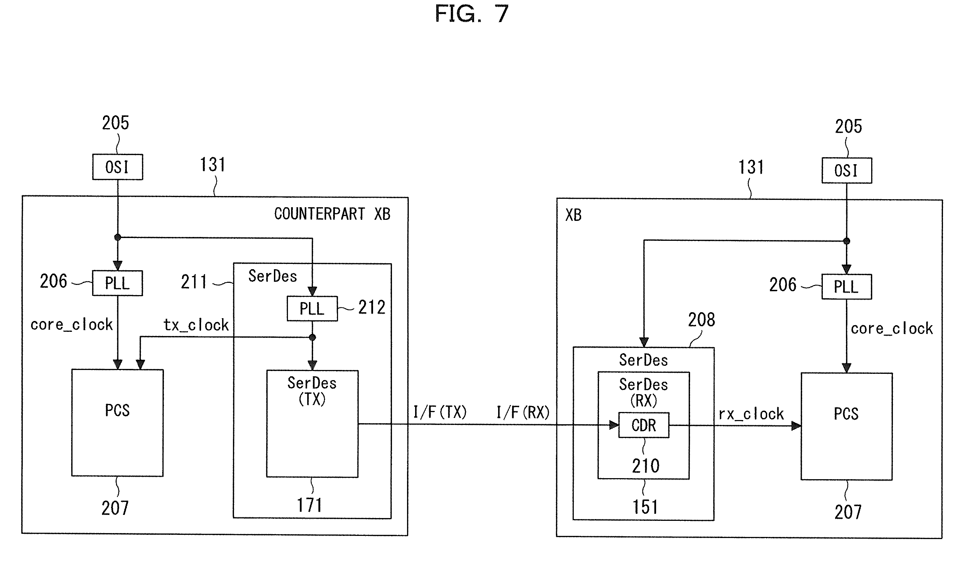

FIG. 7 is a diagram illustrating an oscillator (OSI) 205 and a reception clock in connecting and connected XBs 131.

An XB 131 is connected to a counterpart XB 131, and the connected XB 131 is a sender while the XB 131 is a receiver.

The XB 131 includes an oscillator 205, a phase locked loop (PLL) 206, a PCS 207, and a deserializer 208. The deserializer 208 includes a deserializer 151 as described previously, and the deserializer 151 internally includes a clock data recovery (CDR) 210.

The oscillator 205 generates a reference frequency that is used for generating a clock.

The PLL 206 generates an internal clock core_clock for an XB 131 from the reference frequency from the oscillator 205.

The deserializer 208 converts received 1-bit width serial data into 16-bit width parallel data.

The CDR 210 restores a reception clock rx_clock. The 16-bit width parallel data output from the deserializer is in synchronization with rx_clock.

The PCS 207 receives core_clock, the reception clock rx_clock, and a transmission clock tx_clock. The receiver PCS 207 performs change from rx_clock to core_clock in an elastic buffer, a 8B10B decoder, and a descrambling. The transmitter PCS 207 performs scrambling, an 8B10B encoder, and change from core_clock to tx_clock in a transmission gear box 173.

Note that a reception clock rx_p_*_clock for each lane is generated by the CDR 210, while a transmission clock tx_p_*_clock is generated by the PLL 212.

In the meantime, the connected XB 131 includes an oscillator 205, a PLL 206, a PCS 207, a PLL 212, and a serializer 211. The serializer 211 includes a serializer 171 as described above.

The serializer 211 generates 1-bit width serial data from 16-bit width parallel data that is sent.

The PLL 212 generates the transmission clock tx_clock from a reference frequency from the oscillator 205.

As depicted in FIG. 7, respective reference clocks are provided to the XB 131 and the counterpart XB 131 from the respective oscillators 205.

As set forth above, rx-p_*_Clock is restored from the CDR 210. Here, for example, rx_p_*_clock is a multiplication of the oscillator 205 in the counterpart XB 131, and a clock frequency difference with respect to core_clock, of +/-300 ppm or less, is present.

In order to absorb any frequency difference among core_clock, rx_p_*_clock, and tx_p_*_clock, the transfer speed difference controller 175 in FIG. 6 generates a data_valid_timing signal that indicates valid timing for writing to a transmission gear box 173 or reading from an elastic buffer 153.

For example, when the I/F speed is 16 GHz, the transfer speed difference controller 175 outputs '1' to data_valid_timing in every cycle, permitting data to be written to a transmission gear box 173 in every cycle. The transfer speed difference controller 175 permits data to be read from an elastic buffer 153 in every cycle unless a clock frequency difference compensation is performed.

When the I/F speed is 10 GHz, the transfer speed difference controller 175 sets data_valid_timing to '1' in five cycles out of every eight cycles. When the I/F speed is 8 GHz, the transfer speed difference controller 175 sets data_valid_timing to '1' in every other cycle.

Here, by outputting '1' and '0' as evenly as possible to data_valid_timing, the transfer speed difference controller 175 reduces packet accumulation time due to any cut through.

Here, the term "cut through" means an action wherein transmission of the beginning of a packet is initiated after data is received to the amount where reception of the end of that packet is assured in a data buffer, without waiting until the end of the packet is received.

For example, if the I/F speed is 10 GH, the transfer speed difference controller 175 outputs "1, 1, 0, 1, 1, 0, 1, 0, ..." to data_valid_timing by setting 0 and 1 as alternatingly as possible, rather than outputting 1 or 0 continuously, such as "1, 1, 1, 1, 1, 0, 0, 0, ...".

Here, a transmission gear box 173 on the sending side (see FIG. 6) reads 16-bit width data, in every cycle of tx_p_*_clock, and outputs it to a serializer 171. For write to a transmission gear box 173, by writing 20-bit width data only when data_valid_timing = 1 at core_clock, a transfer speed difference between the sending-side I/F transfer speed and a transfer speed internal to an XB 131 is absorbed.

In the meantime, an elastic buffer 153 on the receiving side (see FIG. 6) has functions to compensate for a clock frequency difference, hold adjustment positions of a skew among the lanes, and absorb the transfer speed difference considering a cut through action.

An elastic buffer 153 writes 16-bit width data in every cycle, in synchronization with rx_p_*_clock.

Upon write, the elastic buffer 153 detects a symbol boundary, while performing alignment such that read can be made in a unit of 20-bit symbol upon read.

Upon read, data is read from an elastic buffer 153 in a 20-bit width, in synchronization with core_clock. An elastic buffer 153 has functions to compensate for a clock frequency difference, hold adjustment positions of a skew among the lanes, and absorb the transfer speed difference between the I/F transfer speed and a transfer speed internal to an XB 131.

An elastic buffer 153 performs a clock frequency compensation using a clock frequency difference compensation pattern.

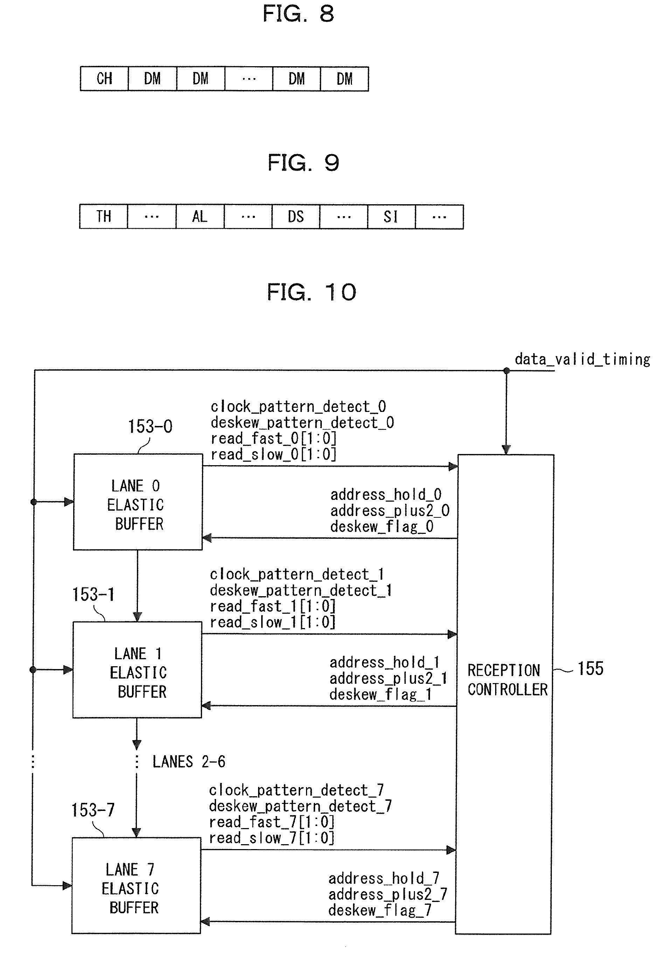

FIG. 8 is a diagram illustrating a format of a clock frequency difference compensation pattern in an example of an embodiment.

The training pattern as an example of an embodiment is configured by a plurality of (e.g., 7) symbols, wherein a single symbol is configured by 20 bits. The types of the symbols can be CH and DM.

CH refers to a clock head, and is a symbol indicating the head of a clock frequency difference compensation pattern.

DM refers to dummy, and is a symbol to be added or deleted in the clock frequency difference compensating operation. The DM is added or deleted in the control of the read address of an elastic buffer 153.

In response to receiving a clock frequency difference compensation pattern depicted in FIG. 8, an elastic buffer 153 performs a clock frequency compensation. Since a transmission circuit 172 absorbs a frequency difference of +/-300 ppm at maximum, it requires to transmit one clock frequency difference compensation pattern in every 1666 symbol times.

As used herein, the term "one symbol time" refers to the time for transmitting and receiving one symbol, i.e., 20 bits.

Upon receiving the clock frequency compensation pattern, the elastic buffer 153 recognizes that a sequence of CH and DM (hereinafter, denoted by "CH+DM") has been received.

When the I/F speed is 16 Gbps, e.g., when data_valid_timing becomes "1" in every cycle, the elastic buffer 153 typically increments the read pointer (read_pointer) by one (+1) in every cycle.

However, when the clock frequency difference compensation pattern is received, if the read pointer (read_pointer) for the elastic buffer 153 is faster than the write pointer (write_pointer), the elastic buffer 153 holds the read pointer (read_pointer) for one cycle. In this case, in the read data, the DM symbol in the clock frequency difference compensation pattern is read redundantly for one cycle.

In contrast, when the read pointer (read_pointer) for the elastic buffer 153 is slower than the write pointer (write_pointer), the elastic buffer 153 increments the read pointer (read_pointer) by two (+2). In this case, a single DM symbol in clock frequency difference compensation pattern is skipped in the read data.

The elastic buffer 153 determines whether the read pointer (read_pointer) is faster or slower than the write pointer (write_pointer), by comparing the difference between the write pointer (write_pointer) and the read pointer (read_pointer) (this difference is referred to as "write-read address difference" hereinafter) with a certain reference value (this value is referred to as "predetermined value" hereinafter). When the write-read address difference is equal to the predetermined value, the elastic buffer 153 neither increments by two nor hold the read pointer (read_pointer).

Note that the predetermined value has been set in the XBs 131 in advance.

When the I/F speed is 16 Gbps, a single symbol time coincides with one cycle of core_clock. Hence, the elastic buffer 153 holds or increments it two, the read pointer (read_pointer) for one cycle per clock frequency compensation pattern, for absorbing the clock frequency difference.

Specifically, since the I/F speed coincides with the internal transfer speed in the LSI, the transfer speed difference controller 175 does not have to set data_valid_timing to '0' for reading data by skipping it internally in the XB 131, and sets data_valid_timing to '1' in every cycle.

When the I/F speed is 8 Gbps, one symbol time corresponds to two cycles of core_clock. Hence, the transfer speed difference controller 175 repeatedly sets data_valid_timing '1' and '0'. Since the elastic buffer 153 has to compensate for the difference by one symbol time per single clock frequency difference compensation pattern, it compensates for the difference by two cycles at maximum at core_clock.

When the read pointer (read_pointer) is faster than the predetermined value by two cycles of core_clock (= one symbol time), the elastic buffer 153 holds the read pointer (read_pointer) twice if data_valid_timing is continuously set to '1' upon reception of CH+DM.

When the read pointer (read_pointer) is faster than the predetermined value by one cycle of core_clock (= 0.5 symbol times), the elastic buffer 153 holds the read pointer (read_pointer) once when data_valid_timing = 1.

As set forth above, the elastic buffer 153 as an example of an embodiment adjust the time to hold the read pointer (read_pointer), in accordance with the deviation of the write-read pointer difference from the predetermined value.

Specifically, when the read pointer (read_pointer) is slower than the predetermined value by two cycles of core_clock (= one symbol time), the elastic buffer 153 increments the read pointer (read_pointer) by one, at the timing of data_valid_timing = 0 in the cycle next to the cycle upon reception of CH+DM. The elastic buffer 153 then increments the read pointer (read_pointer) by two, at the timing of data_valid_timing = 1 immediate afterward.

When the read pointer (read_pointer) is slower than the predetermined value by one cycle of core_clock (= 0.5 symbol times), the elastic buffer 153 increments the read pointer (read_pointer) by one at the timing of data_valid_timing = 0, or the elastic buffer 153 increments the read pointer (read_pointer) by two at the timing of data_valid_timing = 1.

When the I/F speed is 12 Gbps, one symbol time corresponds to 4/3 cycles of core_clock, and the transfer speed difference controller 175 repeatedly sets "1,1,1, 0" to data_valid_timing.

When the read pointer (read_pointer) is slower by two cycles of core_clock at 12 Gbps, data_valid_timing is repeatedly sets to '1'. At the timing of data_valid_timing = 0, the elastic buffer 153 cannot increment the read pointer (read_pointer) by one.

If the protocol could assure that the clock frequency compensation pattern is sufficiently long, the elastic buffer 153 would increment the read pointer (read_pointer) by two when data_valid_timing = 1, and further increment it by two the next time when data_valid_timing = 1. Alternatively, the elastic buffer 153 would increment the read pointer (read_pointer) by three (+3), when data_valid_timing = 1.

However, when the protocol cannot permit sufficiently long frequency compensation patterns, the elastic buffer 153 has to increment the read pointer (read_pointer) by two the first time when data_valid_timing = 1, and increment the read pointer (read_pointer) by one after waiting for data_valid_timing being set to '0'. Although it is exceptional, the elastic buffer 153 also has to read data, when data_valid_timing = 0.

In order to avoid any performance deterioration, predicting how much gap is present in a packet is required.

Thus, in a clock frequency difference compensation carried out by the elastic buffer 153, the gap in a packet is not increased beyond the gap determined by data_valid_timing = 1 generated by the transfer speed difference controller 175. In other words, the clock frequency difference compensation does not affect packet accumulation upon cut through.

Here, if each lane independently performed a clock frequency difference compensation, the deskew adjustment position would be misaligned.

In order to avoid such a situation, an elastic buffer 153 and a deskew buffer are integrated, and a clock frequency difference compensation is performed for each port after a skew among the lanes is adjusted.

FIG. 9 is a diagram illustrating a format of a training pattern in an example of an embodiment.

The training pattern is used for exchange of information, deskew, and the like, between connecting ports upon initializing a link.

The training pattern as an example of an embodiment is configured by 32 symbols. The types of the symbols can be TH, AL, DS, and SI. One symbol is configured by 20 bits.

TH refers to a training pattern head, and is a symbol indicating the head of a training pattern.

AL refers to alignment, and is a symbol indicating a 20-bit boundary pattern.

DS refers to deskew, and is a symbol indicating a deskew pattern.

SI refers to sequence information, and is a symbol indicating the information about a notification to a connected port in the initializing procedure.

Note that in a training pattern, a single symbol can have the functions of TH, AL and DS.

The lengths of a training pattern and a clock frequency difference compensation pattern as described above with reference to FIG. 8 are not limited to the above-mentioned lengths. The lengths of the training pattern and the clock frequency difference compensation pattern depend on the operation frequency, the arranged wiring, and the serial bus protocol of a transmission circuit 172, and can be appropriately changed.

FIG. 10 is a configuration diagram illustrating an inter-lane skew adjustment circuit as an example of an embodiment.

In this configuration, elastic buffers 153 are used to adjust a skew among the lanes, and an elastic buffer 153 in each lane is connected to the reception controller 155. In response to detecting CH and DM (CH+DM), the elastic buffer 153 in the lane *(* is an integer of 0-7) asserts a clock_pattern_detect_* signal to the reception controller 155.

Here, the clock_pattern_detect_* * signal is a 1-bit signal indicating that a clock frequency difference compensation pattern is detected in the lane * corresponding to the clock_pattern_detect_* signal, and is set by the corresponding elastic buffer 153.

A deskew_pattern_detect_* signal (second timing signal) is a 1-bit signal indicating that a deskew instruction is received in the corresponding lane, and is set by the corresponding elastic buffer 153.

An address_hold_* signal is a 1-bit signal instructing to hold the read address for the elastic buffer 153 in the lane *.

An address_plus2_* signal is a signal instructing to increment the read address for the elastic buffer 153 for the corresponding lane *, by two.

A deskew_flag_* * signal is a 1-bit signal instructing is a 1-bit signal instructing deskew for adjusting any skew among the lanes.

read_fast_*[1:0] and read_slow_*[1:0] are 2-bit signals indicating the status of the write-read address difference.

Here, since the elastic buffer 153 includes a deskew function, each lane asserts the clock_pattern_detect_* signal at the same timing.

When the read pointer (read_pointer) for the elastic buffer 153 is faster by one cycle of core_clock, the elastic buffer 153 outputs "01" to read_fast_*[1:0].

When the read pointer (read_pointer) is faster by two or more cycles of core_clock, the elastic buffer 153 outputs "10" to read_fast_*[1:0].

When the read pointer (read_pointer) is slower by one cycle, the elastic buffer 153 outputs "01" to read_slow_*[1:0]. When the read pointer (read_pointer) is slower by two or more cycles, the elastic buffer 153 outputs "10" to read_slow_*[1:0].

When the write-read address difference is within the predetermined value, the elastic buffer 153 outputs "00" to read_fast_*[1:0] and read_slow_*[1:0].

In response to the clock_pattern_detect_* signal being asserted, the reception controller 155 sets appropriate values to the address_hold_* signal and the address_plus2_* signal, in accordance with the values of read_fast_*[1:0] and read_slow_*[1:0], in each lane.

Specifically, if read_fas_*[1:0] and read_slow*[1:0] have different values in each lane, the reception controller 155 sets the highest propriety on the information of read_fast_*[1], followed by read_fast_*[0], read_slow_*[0], and read_slow_*[1], in this order.

More specifically, if read_fast_*[1] is asserted in any of the lanes, the reception controller 155 controls to delays the read pointer (read_pointer) by two cycles of core_clock. In other words, the reception controller 155 asserts the address_hold * signal during two clocks while data_valid_timing is sequentially '1'. While the address_hold_* signal is asserted, an elastic buffer 153 holds the read pointer (read_pointer) of that the elastic buffer 153.

If read_fast_*[1] = '0' in all lanes and read_fast_*[0] is asserted in any of the lanes, the reception controller 155 asserts the address_hold_* signal in one cycle at the timing of data_valid_timing = 1.

If read_fast_*[1:0] is "00" in all lanes and read_slow_*[1:0] is "00" in all lanes, the reception controller 155 takes no action.

If read_fast_*[1:0] = "00" in all lanes, read_slow_*[1:0] ≠ "00" in all lanes, and read_slow_*[1:0] is "01" in any of the lanes, the reception controller 155 asserts the address_plus2_* signal in one cycle.

If read_fast_*[1:0] is "00" in all lanes and read_slow_*[1:0] is "10" in all lanes, the reception controller 155 asserts the address_plus2_* signal during continuous two cycles.

When data_valid_timing = 1 while the address_plus2_* * signal is asserted, the elastic buffer 153 increments read_pointer by two. When data_valid_timing = 0, the elastic buffer 153 increments read_pointer by one.

If, however, the protocol does not assure that a clock frequency compensation pattern is sufficiently long, the elastic buffer 153 acknowledges that the address_plus2_* * signal is '1' in the second cycle, and the elastic buffer 153 increments read_pointer by one next time when data_valid_timing = 0.

Alternatively, as a variation to the above-described embodiment, a deskew buffer may be notified of clock frequency compensation information, and the deskew buffer may adjust the skew position among the lanes, which is misaligned in the elastic buffer 153.

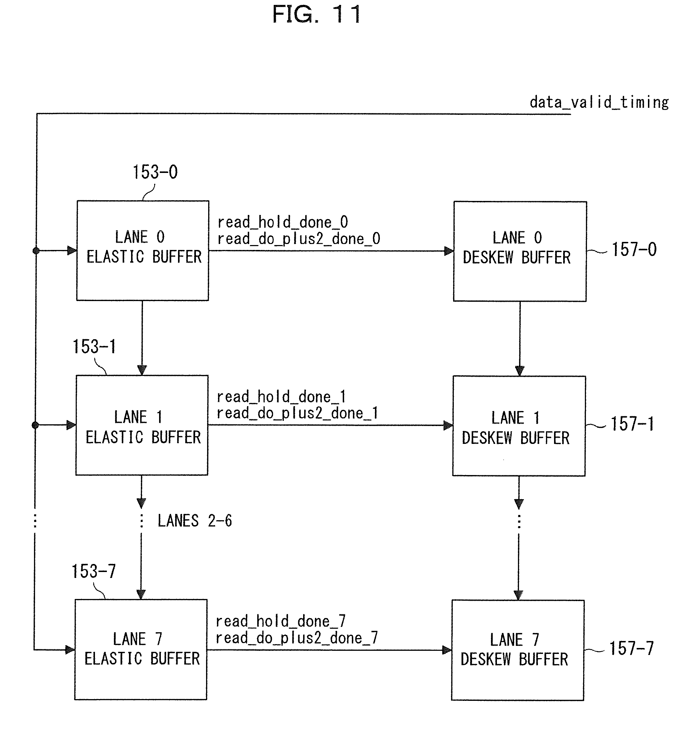

FIG. 11 is a configuration diagram illustrating an inter-lane skew adjustment circuit as a variation to an embodiment.

In this variation, deskew buffers 157-0 through 157-7 are used for adjusting the skew among the lanes.

Deskew buffers 157-0 through 157-7 are provided for the respective lanes 0-7, for performing an adjustment of skew among the lanes.

Here, a read_hold_done_* * signal is a 1-bit signal indicating that the read pointer of the corresponding elastic buffer 153 (read_pointer) is held.

A read_do_plus2_done_* signal is a 1-bit signal indicating that the read pointer of the corresponding elastic buffer 153 (read_pointer) is incremented by two (+2).

Each elastic buffer 153 executes a clock frequency difference compensation, wherein the elastic buffer 153 asserts the read_hold_done_* signal to the corresponding deskew buffer 157 when the read pointer (read_pointer) is held.

If each elastic buffer 153 increments read_pointer by two when data_valid_timing = 1, or increments read_pointer by one when data_valid_timing is deasserted, it asserts the read_do_plus2_done_* signal to the deskew buffer 157.

The deskew buffer 157 adjusts the read position for the deskew buffer 157 to readjust the skew among the lanes, depending on the values of the signals output from the elastic buffer 153.

FIG. 12 a diagram illustrating a configuration of a reception circuit 152 as an example of an embodiment.

This configuration employs the inter-lane skew adjustment circuit in FIG. 10. Note that all the examples presented hereinafter are configurations employing the inter-lane skew adjustment circuit in FIG. 10.

The reception circuit 152 includes, lane blocks 150-0 through 150-7, a reception data restore unit 154, a reception controller 155, a transfer speed difference controller 175, and a training pattern receiver 164.

In an example of an embodiment, the number of lanes is eight, that is, the lanes 0-7. The data is divided by the transmission circuit, and transmitted via the lanes 0-7.

In the following descriptions and the attached drawings, the lane block 150-m connected to the lane m (m=0 through 7) can be described as a lane m block.

The lane m block processes the data which passes through the lane m.

In FIG. 12, the detailed configuration of only the lane 0 block is illustrated. The configurations of the lane 1 block through lane 7 block are the same as the configuration of the lane 0 block.

The lane 0 block 150-0 includes a deserializer 151, a 20-bit boundary detector 159, an elastic buffer 153, a clock frequency difference compensation pattern and deskew detector 160, an 8B10B decoder 161, and a descrambler 162.

The deserializer 151 converts received 1-bit width serial data into 16-bit width parallel data. The deserializer 151 generates a reception clock (rx_p_*_clock) from the received serial data by means of a clock recovery.

The clock core_clock is generated from the reference clock of the local port (connected port).

The deserializer 151, the 20-bit boundary detector 159, and the writing side in the elastic buffer 153 are performed in synchronization with rx_p_*_clock.

The read from the elastic buffer 153, and the operation of the clock frequency difference compensation pattern and deskew detector 160, the 8B10B decoder 161, and the descrambler 162 are performed in synchronization with core_clock.

The 20-bit boundary detector 159 detects a boundary pattern in the received data, and adjusts the received data to 20-bit boundary data in a 10b-code unit.

The elastic buffer 153 is a FIFO buffer to absorb a clock frequency difference. The elastic buffer 153 normally increments by one (+1), according to the data_valid_timing signal output from the transfer speed difference controller 175. However, the reception controller 155 holds, increments by one, or increments by two (+2), the read address, depending on a control signal from the clock frequency difference compensation pattern and deskew detector 160.

The elastic buffer 153 reads data, and outputs the data to the clock frequency difference compensation pattern and deskew detector 160 and the 8B10B decoder 161. The elastic buffer 153 also outputs a signal indicating whether the difference between the write and read addresses is greater than a predetermined value.

The elastic buffers 153 will be described later in detail with reference to FIG. 14. Here, an elastic buffer 153 includes synchronizing flip flops (FFs) 166 and 167, a write address controller 165, an FIFO 168, and a read address controller 169.

As depicted in FIG. 12, the clock frequency difference compensation pattern and deskew detector 160 outputs a signal for controlling the read address, to the elastic buffer 153. The clock frequency difference compensation pattern and deskew detector 160 detects a clock frequency difference compensation pattern and a deskew, and outputs the deskew_pattern_detect_* signal for aligning a signals among lanes. Therefore, the clock frequency difference compensation pattern and deskew detector 160 includes a function as a deskew controller.

The 8B10B decoder 161 converts the 10b-code data into the 8b-code.

A serial data transfer is performed using 8B10B converted data. 8-bit width data (8b-code) is converted by a transmission circuit 172 into 10-bit width data (10b-code), and the converted data is transmitted. The reception circuit 152 restores the 10b-code to the 8b-code.

For the serial bus protocol for converting data by conversion other than the 8B10B conversion, the 8B10B decoder 161 is appropriately changed into a conversion circuit depending on the protocol. The 20-bit boundary detector 159 is also appropriately changed depending on the protocol.

The descrambler 162 restores pseudo randomized data, based on a generating polynomial.

The training pattern receiver 164 identifies a training pattern, and controls an initialization sequence.

The reception controller 155 and the transfer speed difference controller 175 are connected to an elastic buffer 153, and a clock frequency difference compensation pattern and deskew detector 160, respectively, in each lane. In response to detecting skews among the lanes, the reception controller 155 and the transfer speed difference controller 175 output a deskew instruction (deskew_flag) indicating that adjustment of the skew among the lanes should be performed, to an elastic buffer 153 in each lane. In order to eliminate the skew among the lanes, a signal for adjusting a read address is also output to the elastic buffer 153 in each lane, as described later.

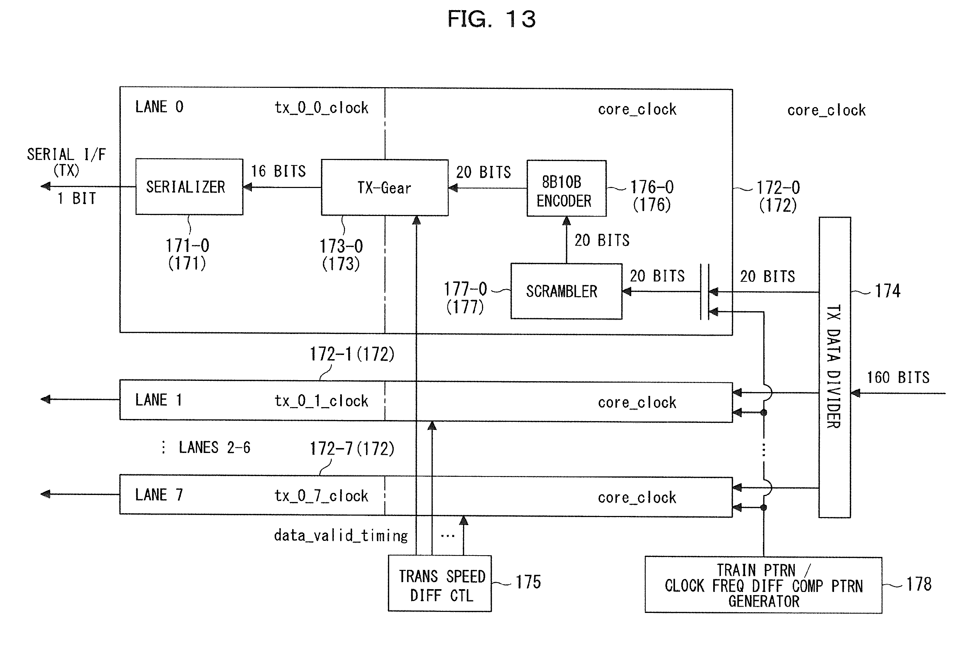

FIG. 13 a diagram illustrating a configuration illustrating a transmission circuit 172 as an example of an embodiment.

This configuration employs the inter-lane skew adjustment circuit in FIG. 10.

The transmission circuit 172 includes a transmission data divider 174, lane blocks 170-0 through 170-7, a transfer speed difference controller 175, and a training pattern and clock frequency difference compensation pattern generator 178.

In an example of an embodiment, the number of lanes is eight, that is, the lanes 0-7. The data is divided by the transmission circuit 172, and transmitted via the lanes 0-7.

In the following descriptions and the attached drawings, the lane block 170-m connected to the lane m (m=0 through 7) can be described as a lane m block.

The lane m block processes the data which passes through the lane m.

In FIG. 13, the detailed configuration of only the lane 0 block is illustrated. The configurations of the lane 1 block through lane 7 block are the same as the configuration of the lane 0 block.

The transmission data divider 174 divides 160-bit transmission data and outputs the divided data to each transmission circuit 172, as described above.

The lane 0 block 170-0 includes, a serializer 171, a transmission gear box 173, and an 8B10B encoder 176.

The scrambler 177 is a typical additive synchronous scrambler, and pseudo randomizes 20-bit transmission data based on a generating polynomial.

The 8B10B encoder 176 converts the 8b-code data into the 10b-code.

For the serial bus protocol for converting data by conversion other than the 8B10B conversion, the 8B10B encoder 176 is appropriately changed into a conversion circuit depending on the protocol.

The transmission gear box 173 is an FIFO, wherein 20-bit width data is written at the core_clock clock and 16-bit width data is read at the tx_p_*_clock clock.

The serializer 171 converts received 16-bit width parallel data to 1-bit width serial data.

The clock core_clock is generated from the reference clock of the local port (connected port).

Up to the write to the transmission gear box 173, the operation is performed in synchronization with core_clock.

The read from transmission gear box 173, and the operation of the serializer 171 are performed in synchronization with tx_p_*_clock.

The clock frequency difference compensation pattern and deskew detector 160 outputs, to the elastic buffers 153, a signal for controlling read addresses.

A serial data transmission is carried out on 8B10B-converted data. 8-bit width data (8b-code) is converted into 10-bit width data (10b-code) by a transmission circuit 172, and the converted data is sent. The reception circuit 152 restores 10b-code to 8b-code.

Regardless of whether the serial bus is being initialized or the initialization is completed, the training pattern and clock frequency difference compensation pattern generator 178 periodically transmits a clock frequency difference compensation pattern, for a clock frequency difference compensation between a connecting XB 131 and a connected XB 131. For example, when a clock frequency tolerance from the reference clock between connection devices is within +/- 300 ppm, the training pattern and clock frequency difference compensation pattern generator 178 transmits one clock frequency difference compensation pattern within 1666 cycles.

Since the transfer speed difference controller 175 is common with that for the reception circuit 152 described above, descriptions therefor will be omitted.

FIG. 14 is a diagram illustrating a configuration illustrating an elastic buffer 153 as an example of an embodiment.

An elastic buffer 153 includes write address controller 165, a read address controller 169, the FIFO 168, synchronizing FFs 166 and 167, and a clock frequency difference compensation pattern and deskew detector 160.

The write address controller 165 controls the write address (write_address) for the FIFO 168.

The read address controller 169 controls the read address (read_address) for the FIFO 168.

The FIFO 168 has twenty two stages with 20-bit width.

The clock rx_p_*_clock is input to the write address controller 165 and the FIFO 168. The write address controller 165 and the FIFO 168 operate in synchronization with rx_p_*_clock. As described above, rx_p_*_clock is generated by the deserializer 151 from received serial data, by means of a clock recovery.

The clock core_clock is input to the synchronizing FFs 166 and 167, the read address controller 169, and the clock frequency difference compensation pattern and deskew detector 160. The synchronizing FFs 166 and 167, the read address controller 169 and the clock frequency difference compensation pattern and deskew detector 160 operate in synchronization with core_clock.

The FIFO 168 has twenty two stages with 20-bit width. Since there is a difference between a write clock and a read clock, there is a slight difference in throughput between a write and a read. In an example of an embodiment, the number of stages of the FIFO is 22, but the number is not limited to 22. When the skew among the lanes of a system bus is small, the number of stages of a FIFO can be smaller.

The data write_data is written to the FIFO 168 at the write address write_address input from the write address controller 165.

Upon receipt of the boundary detection notification (alignment_detect signal) from the 20-bit boundary detector 159, the write address controller 165 starts writing data (alignment_data) to the FIFO 168 for each symbol.

The write address controller 165 writes data in synchronization with the rx_p_*_clock. That is, the rx_p_*_clock is a write clock.

The write address controller 165 writes data at the address write_address of the FIFO 168 when a write_enable signal is 1. The write address controller 165 starts the write address (write_address) from 0, and constantly increments the address by 1. The write address controller 165 laps round the write address at 21, and returns to 0. When returning the write address to 0, the write address controller 165 inverts a write_lap_round signal for notification of the lap-round of the write address to the reading side.

The synchronizing FF 166 outputs the write_enable signal as a write_enable_sync signal in synchronization with the core_clock.

The synchronizing FF 167 outputs the write_lap_round signal as a write_lap_round_sync signal in synchronization with the core_clock.

The read address controller 169 starts reading data at the read address 0 by the assertion of the write_enable_sync signal as a synchronized write_enable signal. The read address controller 169 basically increments the read address by one every cycle, laps round the read address at 21, and returns the read address to 0.

The read address controller 169 recognizes that the write address returns to 0 by detecting a change (inversion) of the write_lap_round_sync signal as the write_lap_round signal synchronized with the core_clock. Thus, the write-read address difference as a difference between a write address and a read address is recognized. The write-read address difference changes depending on the clock frequency difference.

When a write clock is compared with a read clock, and the write clock is faster (the read clock is slower), the write-read address difference gradually becomes larger than a reference value.

When the write clock is slower (the read clock is faster), the write-read address difference gradually becomes smaller than the reference value.

When the write-read address difference is larger than the reference value, the read address controller 169 sets values to read_slow_*[1:0] indicating that the read clock is slower. Specifically, when the read pointer (read_pointer) for the elastic buffer 153 is slower by one cycle of core_clock, the read address controller 169 sets "01" to read_slow_*[1:0]. When the read pointer (read_pointer) is slower by two or more cycles of core_clock, the elastic buffer 153 sets "10" to read_slow_*[1:0].

When the write-read address difference is smaller than the reference value, the read address controller 169 sets values to read_fast_*[1:0] indicating that the read clock is faster. Specifically, when the read pointer (read_pointer) for the elastic buffer 153 is faster by one cycle of core_clock, the read address controller 169 sets "01" to the read_fast_*[1:0]. When the read pointer (read_pointer) is faster by two or more cycles of core_clock, the elastic buffer 153 sets "10" to read_fast_*[1:0].

When the write-read address difference equals the reference value, the read address controller 169 sets the value of "00" to both read_slow_*[1:0] and read_fast_*[1:0]. The read_slow_*[1:0] and read_fast_*[1:0] is output to the clock frequency difference compensation pattern unit 180.

The read address controller 169 adjusts the write-read address difference to the reference value by the function of clock frequency difference compensation.

The reference value is controlled in accordance with values of an address_hold_* * signal and an address_plus2_* signal.

When the address_hold_* * signal is asserted (i.e., the value is '1'), the read address controller 169 does not increment the read address.

In contrast, when the address_plus2_* * signal is asserted (i.e., the value is '1'), the read address controller 169 increments the read address by two.

The information about the write-read address difference is updated by a change of the write_lap_round_sync signal or the assertion of the address_hold and the address_plus2_* signals.

In response to alignment_detect, the elastic buffer 153 starts writing. The write address is incremented by one in every cycle, and data is written in 16-bit unit such that the data is aligned in 20 bits by the read address controller 169 in the elastic buffer 153. The write_enable signal is synchronized and the write_enable_sync signal is output, such that the read address controller 169 can recognize the write.

When the value '0' is written to the write_address, the write address controller 165 toggles the write_lap_round signal to notify the read address controller 169 of the position of the write address.

The read address controller 169 recognizes the timing when the write_address is set to '0', from the write_lap_round_sync signal synchronized with the write_lap_round signal, and recognizes the write-read address difference.

The read address controller 169 holds or increments by two read_address, such that the write-read address difference equals (is within) the predetermined value.

Before completion of a deskew, an elastic buffer 153 in each lane independently adjusts a read address at the timing when clock_pattern_detect_* = 1, such that the write-read address difference equals (is within) the predetermined value.

After completion of deskew, the elastic buffer 153 outputs values to read_fast[1:0] and read_slow[1:0] to the reception controller such that the positions to adjust skew among the lanes are not misaligned, and adjusts the write-read address difference in accordance with the address_hold_* signal and the address_plus2_* signal output from the reception controller.

FIG. 15 is a diagram illustrating an example of the transfer speed difference controller 175 as an example of an embodiment.

The transfer speed difference controller 175 includes a ×20 multiplier 301, an adder 302, a comparator 303, a subtracter 304, a selector 305, and an FF 306.

The adder 302 receives an I/F speed having a value of value_A (MHz), from the service processor 139. The ×20 multiplier 301 receives a core_clock frequency having a value of value_B (MHz), from the service processor 139. The transfer speed difference controller 175 also employs value_C which is a temporary variable. The value_C has a value smaller than value_B × 20.

Here, the transfer speed difference controller 175 calculates the data_valid_timing signal in every cycle of core_clock. If the value value_B × 20 output from the ×20 multiplier 301 is smaller than the value (value_C + value_A), output from the adder 302, e.g., (value_B × 20) ≤ (value_C + value_A), the comparator 303 outputs data_valid_timing = 1. Otherwise, if this condition is not met, the comparator 303 outputs data_valid_timing = 0.

Assuming that the value of value_C becomes post_value_C after one cycle, post_value_C can be calculated in the subtracter 204, the selector 305, and the FF 306 from value_C as follows: post_value_C = (value_C + value_A) % (value_B × 20), where '%' represents modulus operator. Then, the resultant post_value_C is input to the adder 302 as a new value_C.

The reason why (value_B × 20) is included in the above calculation is that each lane transfers data in a 1-bit width in the I/F portion, whereas data is transferred in a 20-bit width in the core_clock region. In this case, if the condition: value_A ≤ (value_B × 20) is not met, the I/F speed is always faster and thus the elastic buffer 153 overflows. For the reason, value_A and value_B should meet the condition: value_A ≤ (value_B × 20).

FIG. 16 is a diagram illustrating an example of the configuration of the reception controller 155 as an example of an embodiment.

The reception controller 155 includes a deskew controller 179 and a clock frequency difference compensation pattern unit 180.

The deskew controller 179 outputs the address_hold_* signals, from the deskew_pattern_detect_* signals from the respective lanes so as to adjust a skew among the lanes. The deskew controller 179 asserts deskew_tim while deskew is carried out, and asserts deskew_flag during the deskew and after completion of the deskew.

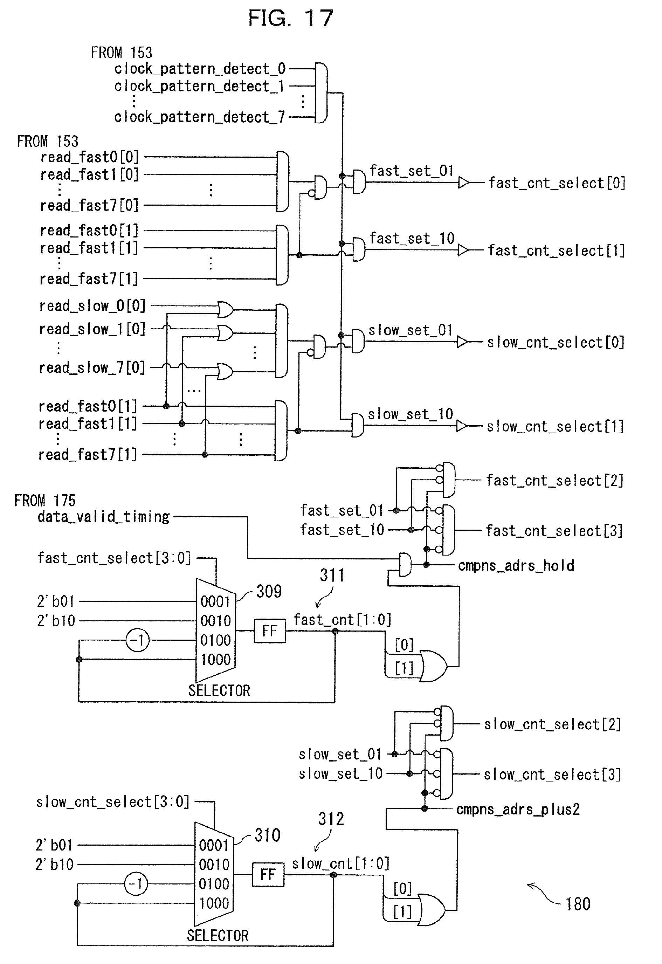

After completion of deskew, the clock frequency difference compensation pattern unit 180 generates a cmpns_adrs_hold signal and a cmpns_adrs_plus2 signal, from the clock_pattern_detect_* signals, read_slow_*[1:0], and read_fast_*[1:0] output from each lane, as will be described later with reference to FIG. 17.

Here, the cmpns_adrs_hold signal is used to generate the address_hold_* signal, instructing to lag the read address for the elastic buffer 153 on the basis of the write address. The cmpns_adrs_hold signal is generated from the clock_pattern_detect_*, data_valid_timing, read_slow_*[1:0], and read_fast_*[1:0] signals.

The cmpns_adrs_plus2 signal is used to generate the address_plus2_* signal, instructing to advance the read address for the elastic buffer 153 on the basis of the write address. The cmpns_adrs_plus2 signal is generated from the clock_pattern_detect_*, data_valid_timing, read_slow_*[1:0], and read_fast_*[1:0] signals.

FIG. 17 is a diagram illustrating an example of the configuration of the clock frequency difference compensation pattern unit 180 in FIG. 16.

The clock frequency difference compensation pattern unit 180 includes selectors 309 and 310, a 2-bit width fast_cnt[1:0] counter 311, and a 2-bit width slow_cnt[1:0] counter 312.

When clock_pattern_detect_* = 1 in all lanes and read_fast_*[1:0] ≠ "00" in any of the lanes, the fast_cnt[1:0] counter 311 is set to a value determined by read_fast_*[1:0]. When data_valid_timing = 1 and fast_cnt[1:0] ≠ "00", cmpns_adrs_hold is asserted to 1. When cmpns_adrs_hold = 1, fast_cnt[1:0] is decremented by one (-1).

When clock_pattern_detect_* = 1 in all lanes and read_slow_*[1:0] ≠ "00" in all lanes, the slow_cnt[1:0] counter 312 is set to a value determined by read_slow_*[1:0]. When slow_cnt[1:0] ≠ "00", cmpns_adrs_plus2 is asserted to 1. When mpns_adrs_plus2 = 1, slow_cnt[1:0] is decremented by one (-1).

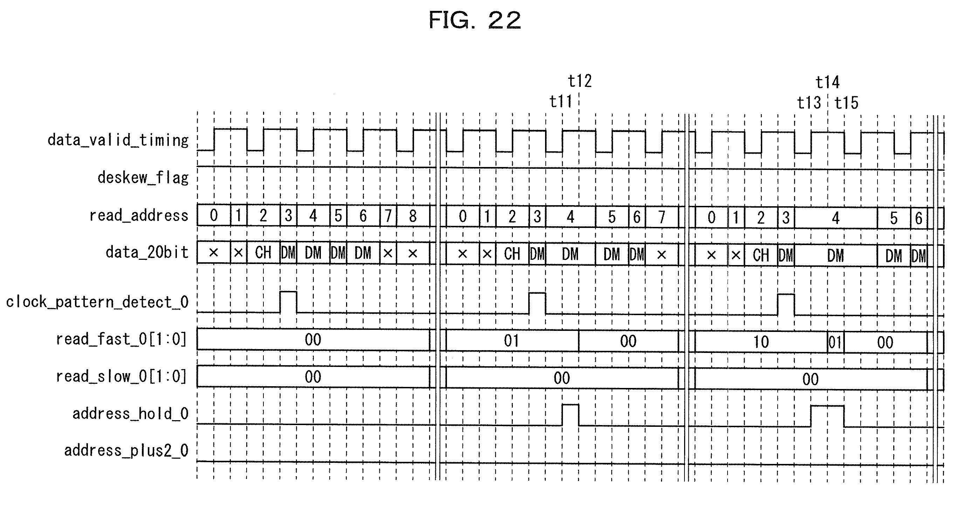

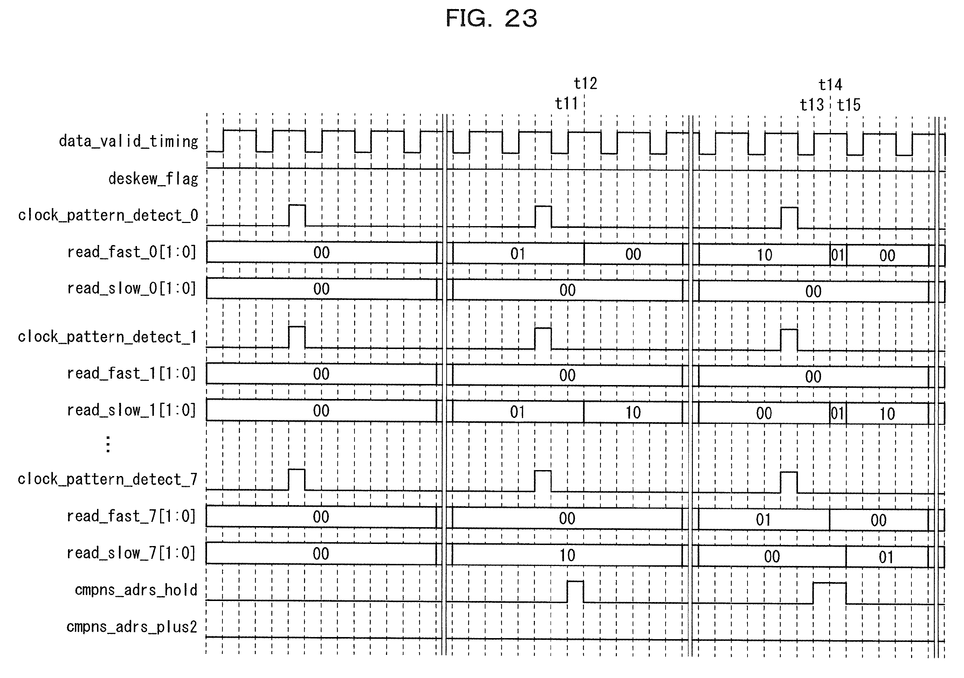

Upon a clock frequency difference compensation (hold) after completion of the deskew, when clock_pattern_detect_* = 1 in all lanes and read_fast_*[1:0] ≠ "00" in any of the lanes, the reception controller 155 asserts the address_hold_* * signal in each lane. When read_fast_*[1:0] = "10, the reception controller 155 asserts the address_hold_* * signal for two cycles next time when data_valid_timing = 1, to notify an address hold. When read_fast_*[1:0] = "01 ", the reception controller 155 asserts the address_hold_* signal in one cycle next time when data_valid_timing = 1, to notify an address hold. Such operations will be described later with reference to FIGS. 22 and 23.

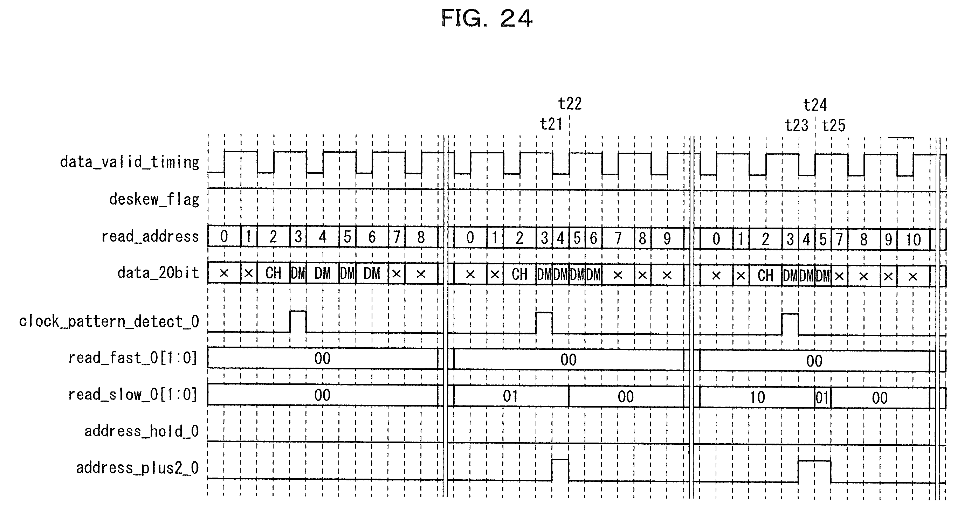

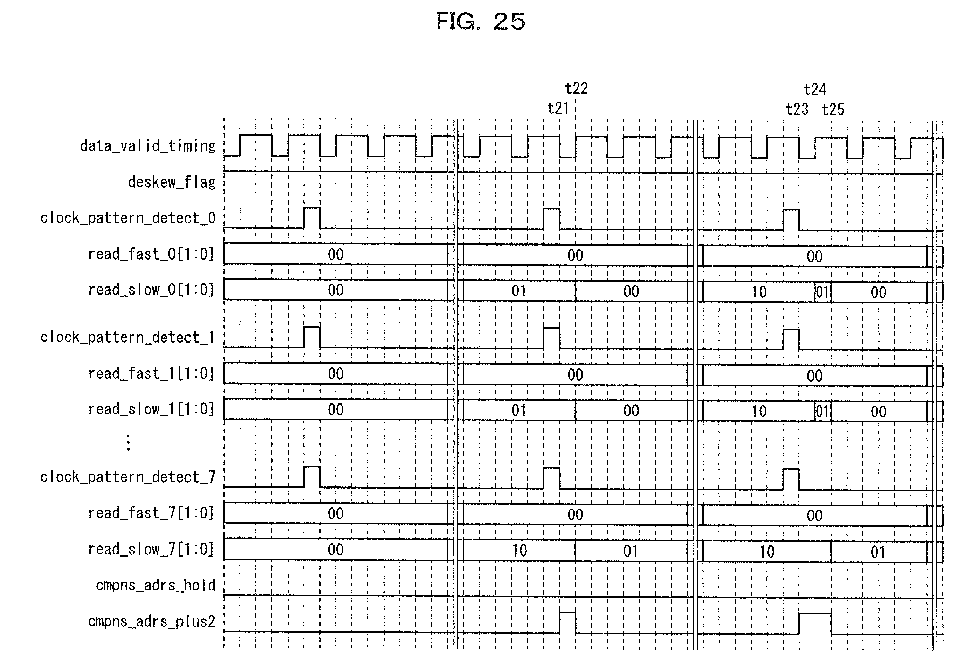

Upon a clock frequency difference compensation (incremented by two) after completion of the deskew, when clock_pattern_detect_* = 1 in all lanes and read_slow_*[1:0] ≠ "00" in all lanes, the reception controller 155 asserts the address_plus2_* signal in each lane. When read_slow_*[1:0] = "10", the reception controller 155 asserts cmpns_adrs_plus2 = 1 for two cycles. When read_slow_*[1:0] = "01 ", the reception controller 155 outputs the address_plus2_* signal in one cycle. Such operation will be described later with reference to FIGS. 24 and 25.

Note that the circuits depicted in FIGS. 15 to 17 are merely exemplary, and any other circuit configurations that can embody the above-described operations may be used.

### (B) Operation

Hereinafter, the operations of XBs 131 as an example of an embodiment will be described.

First, the operation of the connected (sending) XB 131 depicted in FIG. 7 will be described.

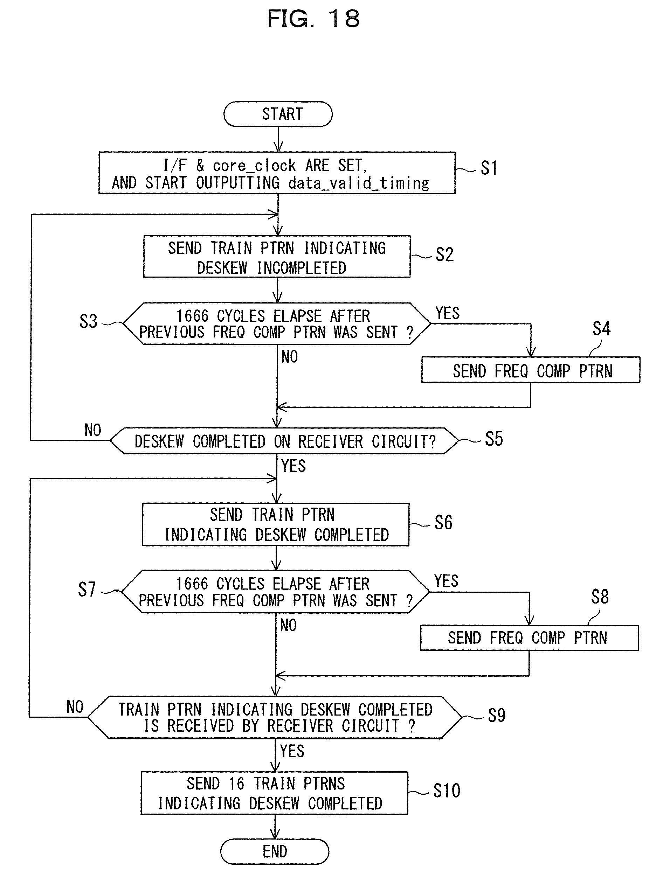

FIG. 18 is a flowchart (Steps S 1 through S 10) indicating the operation of a port circuit 142 in an XB 131 on the sending side as an example of an embodiment.

In Step S 1, in the transfer speed difference controller 175 in a sending XB 131, the frequencies of the I/F and the core_clock are set by the service processor 139 (see FIG. 5), and the transfer speed difference controller 175 starts outputting data_valid_timing.

In Step S 2, the training pattern and clock frequency difference compensation pattern generator 178 in the sending XB 131 transmits a training pattern having the information about the deskew incompleted state.

Note that the training pattern and clock frequency difference compensation pattern generator 178 transmits a training pattern or a frequency difference compensation pattern in the same timing in all lanes.

In Step S 3, the training pattern and clock frequency difference compensation pattern generator 178 determines whether or not 1666 cycles have passed after the previous transmission of the frequency difference compensation pattern.

If 1666 cycles have passed (see the YES route from Step S 3), in Step S 4, the training pattern and clock frequency difference compensation pattern generator 178 transmits a frequency difference compensation pattern and proceeds to Step S 5.

Otherwise, if 1666 cycles have not passed yet (see the NO route from Step S 3), in Step S 5, the sending XB 131 determines that the receiving XB 131 completes the deskew.

If the deskew has not been completed (see the NO route from Step S 5), the flow returns to Step S 2.

Otherwise, if the deskew has been completed (see the YES route from Step S 5), in Step S 6, the training pattern and clock frequency difference compensation pattern generator 178 transmits a training pattern having the information about the deskew completed state.

Next in Step S 7, the training pattern and clock frequency difference compensation pattern generator 178 determines whether or not 1666 cycles have passed after the previous transmission of the frequency difference compensation pattern.

If 1666 cycles have passed (see the YES route from Step S 7), in Step S 8, the training pattern and clock frequency difference compensation pattern generator 178 transmits a frequency difference compensation pattern and proceeds to Step S 9.

Otherwise, if 1666 cycles have not passed yet (see the NO route from Step S 7), in Step S 9, the training pattern and clock frequency difference compensation pattern generator 178 determines whether or not the training pattern receiver 164 in the receiving XB 131 receives a training pattern having the information indicating the deskew completed state.

If the receiving XB 131 does not receive a training pattern having the information indicating the deskew completed state (see the NO route from Step S 9), the flow returns to Step S 6.

Otherwise, if the receiving XB 131 receives a training pattern having the information indicating the deskew completed state (see the YES route from Step S 9), in Step S 10, the training pattern and clock frequency difference compensation pattern generator 178 transmits 16 training patterns having the information about the deskew completed state to initiate transmission of packets. The flow then ends.

Next, the operation of the local (receiving) XB 131depicted in FIG. 7 will be described.

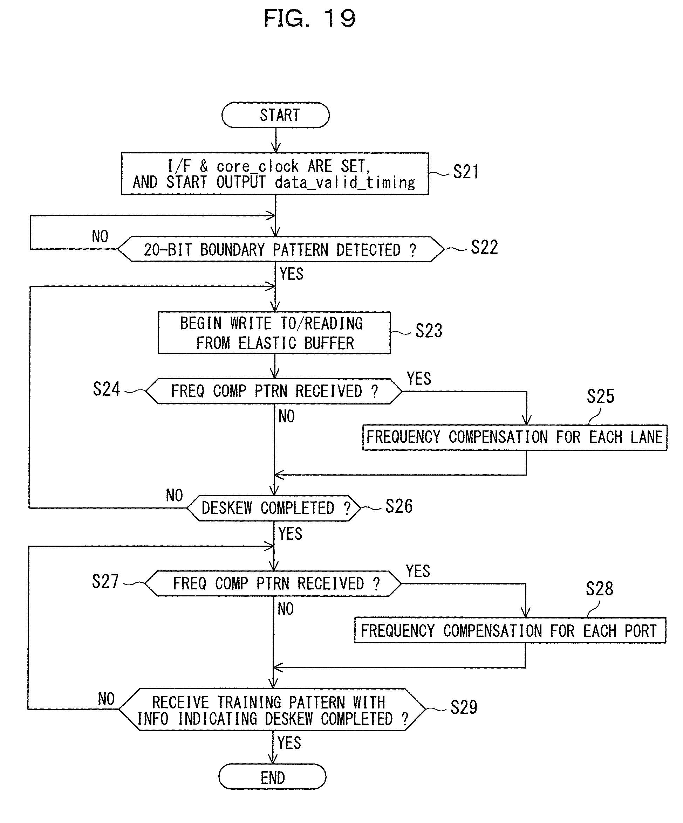

FIG. 19 is a flowchart (Steps S 21 through S 29) indicating the operation of a port circuit 142 in an XB 131 on the receiving side as an example of an embodiment.

In Step S 21, in the transfer speed difference controller 175 in a receiving XB 131, the frequencies of the I/F and the core_clock are set by the service processor 139 (see FIG. 5), and the transfer speed difference controller 175 starts outputting data_valid_timing.

In Step S 22, the 20-bit boundary detector 159 in the receiving XB 131 determines whether or not a 20-bit boundary pattern is detected according to "AL" in the received training pattern.

If 20-bit boundary pattern is not detected (see the NO route from Step S 22), the information about the non-detection of a 20-bit boundary pattern is transmitted and returns to Step S 22.

If 20-bit boundary pattern is detected (see the YES route from Step S 22), in Step S 23, the elastic buffer 153 starts writing data to the elastic buffer 153 and reading data from the elastic buffer 153 according to the 20-bit symbol boundary after detecting the 20-bit boundary pattern.

At this time, using the write_enable_sync signal (see FIG. 14), the elastic buffer 153 notifies the read address controller 169 that data is being written to the elastic buffer 153. The read address controller 169 recognizes the timing when the write address is set to '0' with the write_lap_round_sync signal, and starts reading such that the read-write address difference has an appropriate value.

In Step S 24, the clock frequency difference compensation pattern and deskew detector 160 determines whether or not a clock frequency difference compensation pattern is received.

If a clock frequency difference compensation pattern (see the YES route from Step S 24), in Step S 25, an elastic buffer 153 in each lane in the receiving XB 131 independently performs the clock frequency difference compensation. At this time, the read address for the elastic buffer 153 is adjusted such that the difference between the write and read addresses for the elastic buffer 153 (write-read address difference) is within a reference value range. In response to detecting deskew patterns in all lanes, the reception controller 155 adjusts skew among the lanes. Thereafter, the flow proceeds to Step S 26.

If no clock frequency difference compensation pattern is received (see the NO route from Step S 24), in Step S 26, the deskew controller 179 determines whether the deskew has been completed.

If the deskew has not been completed (see the NO route from Step S 26), the flow returns to Step S 23.

If the deskew has been completed (see the YES route from Step S 26), in Step S 27, the clock frequency difference compensation pattern and deskew detector 160 determines whether or not a clock frequency difference compensation pattern is received.

If a clock frequency difference compensation pattern is received (see the YES route from Step S 27), in Step S 28, an elastic buffer 153 in each lane in the receiving XB 131 performs the clock frequency difference compensation for each port in collaboration with the reception controller 155. Thereafter, the flow proceeds to Step S 29.

If no clock frequency difference compensation pattern is received (see the NO route from Step S 27), in Step S 29, the training pattern receiver 164 determines whether a training pattern having the information indicating the deskew completed state is received.

If a training pattern having the information indicating the deskew completed state is not received (see the NO route from Step S 29), the flow returns to Step S 27.

Otherwise, if a training pattern having the information indicating the deskew completed state is received (see the YES route from Step S 29), the flow ends.

After completion of initialization of the serial bus, the training pattern and clock frequency difference compensation pattern generator 178 in the sending XB 131 stops transmitting training patterns and starts transmitting data. The training pattern and clock frequency difference compensation pattern generator 178 continues to transmit clock frequency difference compensation patterns periodically after the initialization is completed.

The receiving XB 131 restores received data. At this time, an elastic buffer 153 in the receiving XB 131 continues a clock frequency difference compensation for each port.

The training pattern that is transmitted during the initialization contains information indicating the status of the initialization. Using the information, the statuses of connected ports, e.g., the status when a 20-bit boundary pattern is detect, can be obtained, and the initialization process can be completed in synchronization. For example, the deskew controller 179 can know that a deskew has been completed in the ports from the training pattern received from the connecting port and the training pattern transmitted from the local port (connected port), and may determine that the initialization is completed and packets can be transmitted and received.

The operation is not limited to the operations illustrated in FIGS. 18 and 19, but can be appropriately changed depending on the serial bus protocol.

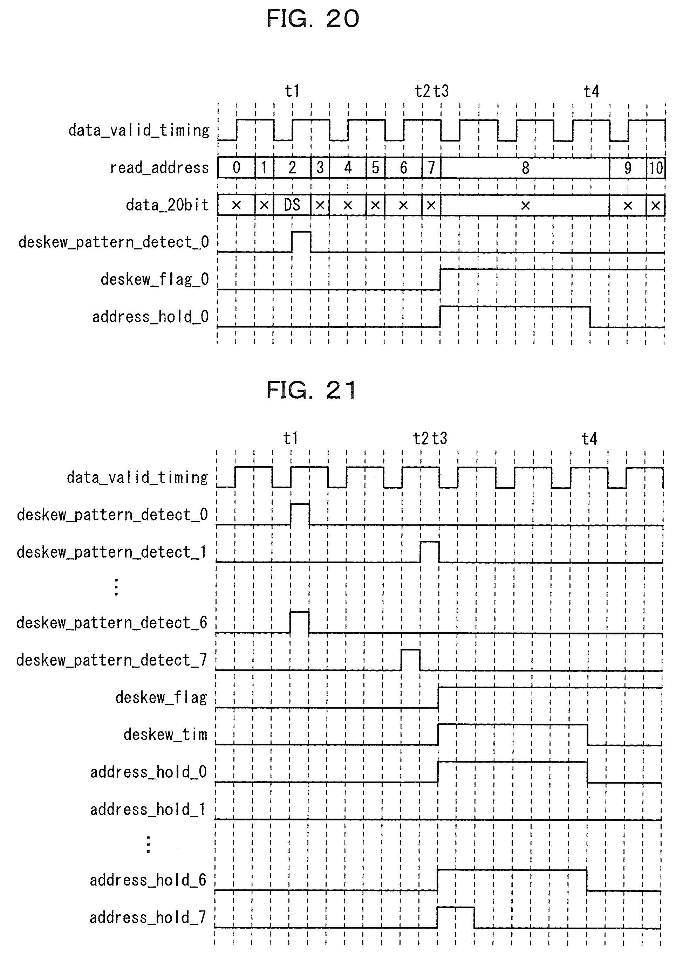

Time charts upon deskew are depicted in FIGS. 20 and 21.

FIG. 20 is a time chart of the elastic buffer 153 as an example of an embodiment upon deskew. FIG. 21 is a time chart of the reception controller 155 as an example of an embodiment upon deskew. FIGS. 20 and 21 indicate the status of the signals in the same time frame.

In FIG. 20, only signals in the lane 0 are illustrated and signals in the lane 1 to 7 blocks are omitted.

In FIGS. 20 to 25, the symbol "x" indicates received data other than "CH", "DM", and "DS", such as a packet.

At t1, a deskew pattern is detected earliest in the lane 0, and at t2, the pattern is detected last in the lane 1 (see FIG. 21).

In response to a detecting deskew pattern in all lanes before a deskew is completed, when the deskew_flag signal is asserted in the lane having the greatest skew, e.g., the lane wherein the deskew pattern is received last, the address_hold_* signal is asserted.

When the address_hold_* * signal is asserted, the read address (read_address) is held. Therefore, in FIG. 20, read_address is held for nine cycles to the address "8".

After the deskew pattern is detected in all lanes, at t3, deskew_flag and deskew_tim are asserted. After the address hold due to the deskew is completed, deskew_tim is deasserted at t4. Note that no address hold due to the deskew occurs in the lane 1 wherein the deskew pattern is received last so as to minimize the latency. In other lanes, the address_hold_* * signal is asserted while data_valid_timing = 1 and the skew among the lanes is adjusted.

In the example in FIGS. 20 and 21, address_hold_0 ='1' is asserted in the lane 0 during eight cycles from t3 to t4. Five cycles while data_valid_timing = 1 of the eight cycles, the read address is held for adjusting the deskew. The remaining three cycles while data_valid_timing = 0 of the eight cycles, the read address is held not for adjusting the deskew, but for absorbing the transfer speed difference.

An elastic buffer 153 in each lane independently performs a clock frequency difference compensation while deskew_flag is deasserted. While deskew_flag is asserted, a clock frequency difference compensation is performed for each port.

Time charts of clock frequency difference compensation (hold) for each port after completion of deskew are depicted in FIGS. 22 and 23.

FIG. 22 is a time chart of clock frequency difference compensation (hold) in the elastic buffer 153 as an example of an embodiment after completion of deskew. FIG. 23 is a time chart of clock frequency difference compensation (hold) in the reception controller 155 as an example of an embodiment after completion of deskew. FIGS. 22 and 23 indicate the status of the signals in the same time frame.

In FIG. 22, only signals in the lane 0 are illustrated and signals in the lane 1 to 7 blocks are omitted.

When clock_pattern_detect_* = 1 in all lanes and read_fast[1:0] ≠ "00" in any of the lanes, the reception controller 155 asserts the address_hold_* * signal in each lane. When read_fast_*[1:0] = "10", the reception controller 155 asserts the address_hold_* * signal during two cycles when data_valid_timing = 1 (next time when data_valid_timing = 1), to notify an address hold. In FIG. 23, under the condition that read_fast_0[1:0] = "10", the reception controller 155 asserts cmpns_adrs_hold = 1 for two cycles from t13 to t15. When read_fast_*[1:0] = "01", the reception controller 155 asserts the address_hold_* signal in one cycle when data_valid_timing = 1 (next time when data_valid_timing = 1), to notify an address hold. In FIG. 23, under the condition that read_fast_0[1:0] = "01" or read_fast_1[1:0] = "01 ", the reception controller 155 asserts cmpns_adrs_hold = 1 in one cycle from t11 to t12.

At t11, t13, and t14 when the address hold is notified, the elastic buffer 153 stops incrementing the read address.

Time charts of clock frequency difference compensation (incremented by two) for each port after completion of deskew are depicted in FIGS. 24 and 25.

FIG. 24 is a time chart of clock frequency difference compensation (incremented by two) in the elastic buffer 153 as an example of an embodiment after completion of deskew. FIG. 25 is a time chart of clock frequency difference compensation (incremented by two) in the reception controller 155 as an example of an embodiment after completion of deskew. FIGS. 24 and 25 indicate the status of the signals in the same time frame.

In FIG. 24, only signals in the lane 0 are illustrated and signals in the lane 1 to 7 blocks are omitted.

When clock_pattern_detect_* = 1 in all lanes and read_slow_*[1:0] ≠ "00" in all lanes, the reception controller 155 asserts the address_plus2_* signal in each lane. When read_slow_*[1:0] = "10", the reception controller 155 asserts cmpns_adrs_plus2 = 1 during two cycles when data_valid_timing = 1. In FIG. 25, under the conditions that read_slow_0[1:0] = "10", read_slow_1[1:0] = "10", and read_slow_7[1:0] = "10", and that all of the signals from read_slow_2[1:0] to read_slow_6[1:0] (not depicted in FIG. 25) are "10", the reception controller 155 asserts cmpns_adrs_plus2 = 1 for two cycles from t23 to t25. When read_slow_*[1:0] = "01 ", the reception controller 155 outputs address_plus2_* in one cycle when data_valid_timing = 1. In FIG. 25, under the conditions that read_slow_0[1:0] = "01 ", read_slow_1[1:0] = "01 ", and read_slow_7[1:0] = "10" and that all of the signals from read_slow_2[1:0] to read_slow-6[1:0] (not depicted in FIG. 25) are "10" or "01 ", the reception controller 155 asserts cmpns_adrs_plus2 = 1 in one cycle from t21 to t22. In this case, since there is lanes where read_slow_*[1:0] is not "10", cmpns_adrs_plus2 is asserted only in a single cycle.

When the address_plus2_* signal is asserted and data_valid_timing = 1, read_address is incremented by two (+2) in the elastic buffer 153. The read_address is incremented by two (+2) at timing t25 in FIG. 24. When the address_plus2_* signal is asserted and data_valid_timing = 0, read_address is incremented by one (+1). The read_address is incremented by one (+1) at timing t22 and t24 in FIG. 24.

As set forth above, in accordance with elastic buffers 153 as an example of an embodiment, the reading side in the elastic buffers 153 provided in a PCS receiver is operated on core_clock. To absorb the transfer speed difference, read from the elastic buffers 153 is thinned out and read is performed in all lanes at synchronized valid timing. In other words, data is read from the elastic buffers 153 and the read pointer (read_pointer) is incremented by one at valid timing.

During a clock frequency difference compensation initiated by reception of a clock frequency difference compensation pattern, when the read pointer (read_pointer) is faster and is about to catch up with the write pointer (write_pointer), the read pointer (read_pointer) is held at valid timing for one or several cycles, based on write-read difference. When the read pointer (read_pointer) is slow and the difference with the write pointer (write_pointer) is great, the read pointer (read_pointer) is incremented by two at valid timing, whereas read data is read and the read pointer (read_pointer) is incremented by one at invalid timing. In this case, some control should be performed by the elastic buffer 153 or the deskew buffer 157 for maintaining skew position among the lanes.

In addition, the reading side in the transmission gear boxes 173 provided in the PCS receiver is operated on core_clock. To absorb the transfer speed difference, write to the transmission gear boxes 173 is thinned out and write is performed in all lanes at synchronized valid timing. In other words, data is written to the transmission gear boxes 173 and the write pointer (write_pointer) is incremented by one at valid timing.

Accordingly, the difference between the transfer speed of the I/F and the internal transfer speed in an LSI in an XB can be absorbed.

Further, in accordance with the elastic buffer 153 as an example of an embodiment, during clock compensation, the transfer speed difference can be absorbed while maintaining the deskew position.

Additionally, in accordance with the elastic buffer 153 as an example of an embodiment, an elastic buffer 153 is held only when read from the elastic buffer 153 is valid upon receiving a clock frequency difference compensation pattern. Accordingly, data read from the elastic buffer 153 is not suspended in valid timing in the middle of a packet, and accordingly the gap in the packet is not increased, which does not affect the cut through action.

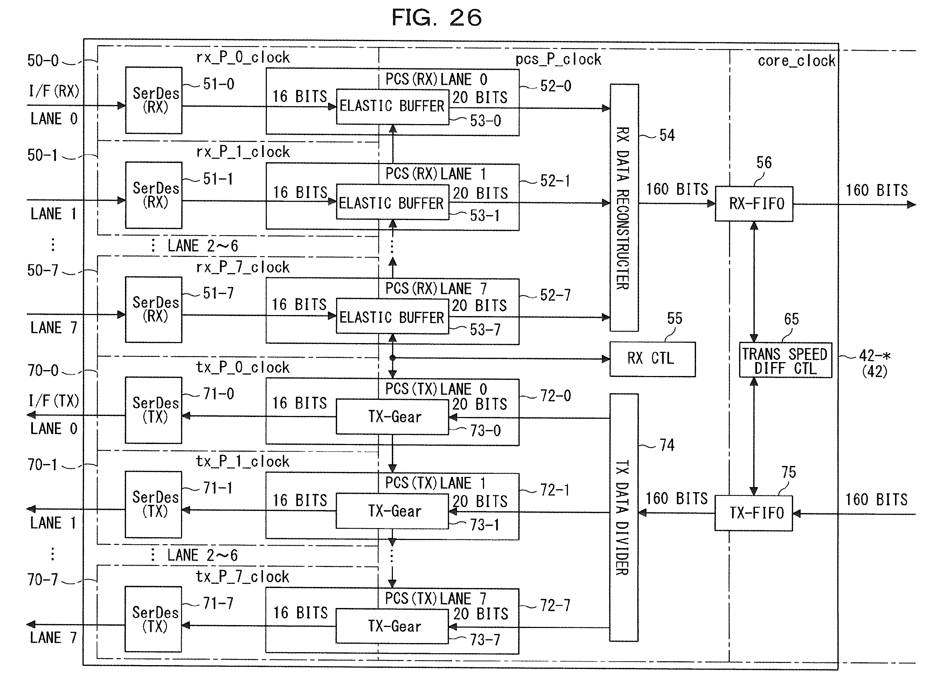

For comparison, a configuration without employing the elastic buffers 153 of the present embodiment will be described with reference to FIGS. 26 to 28.

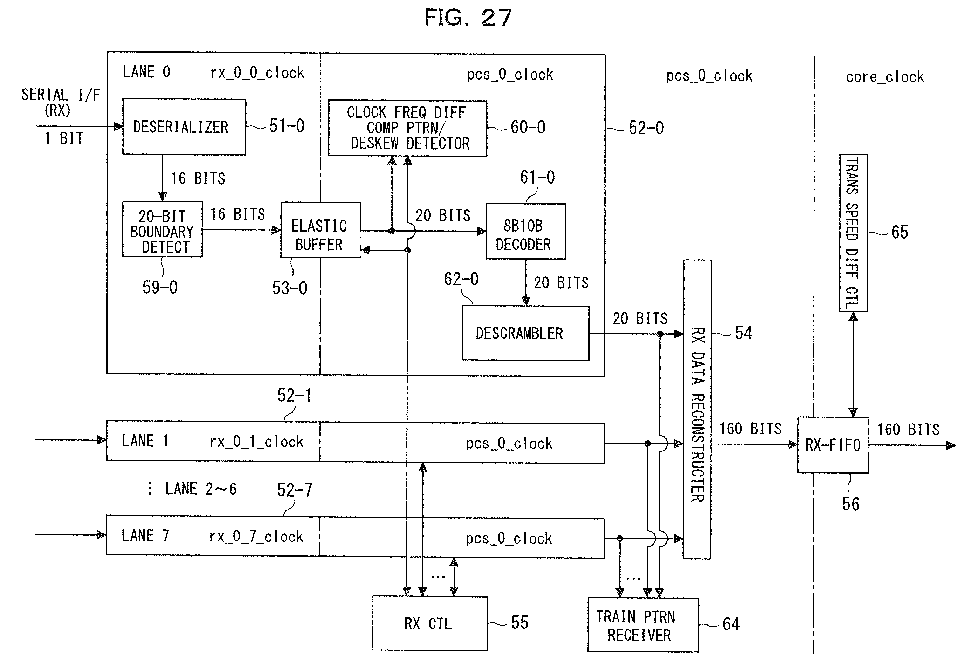

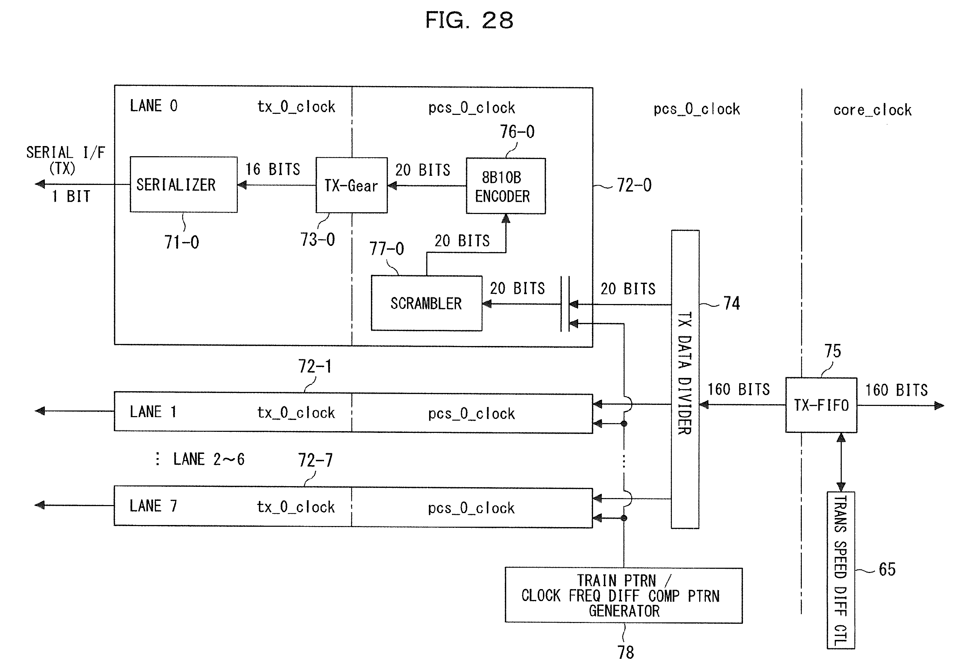

FIG. 26 is a diagram illustrating a configuration of a port circuit without employing the elastic buffers 153 of the present embodiment. FIG. 27 is a configuration diagram of a reception circuit 52 in FIG. 26 is a diagram illustrating a configuration of a transmission circuit 72 in FIG. 28.

As depicted in FIG. 26, each port circuit includes lane m receiver 50-0 through 50-7, a reception data restore unit 54, a lane m transmitter 70-0 through 70-7, a transmission data divider 74, a reception controller 55, a transfer speed difference controller 65, an RX-FIFO 56, and TX-FIFO 75.

In this example, the number of ports are 5, namely, ports 0-4, while the number of lanes is eight, namely, lanes 0-7.

Furthermore, the letter "m" is used to denote any of the lanes 0-7. Hence, a reception lane block 50-m and a transmission lane block 70-m connected to lane m (m = 0-7) is referred to as a "lane m receiver" and a "lane m transmitter".

The functions and configurations of such functional blocks correspond to the functions and configurations of functional blocks in a port circuit as an example of an embodiment.

A lane m receiver 50 receives data from its corresponding lane in the system bus.

Each lane m receiver 50 includes deserializers (SerDes (RX)) 51-0 through 51-7 and reception circuits 52-0 through 52-7.

A deserializer 51 converts received 1-bit width serial data into 16-bit width parallel data.

Each of the reception circuits 52-0 through 52-7 includes elastic buffers 53-0 through 53-7.

An elastic buffer 53 is an FIFO buffer for storing reception data.

The reception data restore unit 54 combines a plurality of pieces of data received by each lane m receiver 52 to restore reception data.

A lane m transmitter 70 transmits data to the corresponding lane in the system bus.

A lane m transmitter 70 includes serializers (SerDes (TX)) 71-0 through 71-7, transmission circuits 72-0 through 72-7, and a transmission data divider 74.

A serializer 71 generates 1-bit width serial data from 16-bit width parallel data that is sent.

Each of the transmission circuits 72-0 through 72-7 includes transmission gear boxes (TX-Gear) 73-0 through 73-7.

A transmission gear box 73 is an FIFO for storing transmission data.

The transmission data divider 74 divides 160-bit transmission data into a plurality of pieces for outputting them to the respective transmission circuits 72.

An RX-FIFO 56 is an FIFO for changing clocks from pcs_clock to core_clock.

A TX-FIFO 75 is an FIFO for changing clocks from core_clock to pcs_clock.

Here, each port can set any appropriate I/F speed to the serializer / deserializer (SerDes).

core_clock operates at the frequency that is independent of the I/F speed, whereas rx_p_*_clock, tx_p_*_clock and pcs_clock operate at the speed that is proportional to the I/F speed.

Here, it is assumed that core_clock is 0.8 GHz independent of the I/F speed. If the I/F speed is 16 Gbps, and the bus width between read from the deserializer 51 and write to the elastic buffer 53 is 16 bits, rx_p_*_clock is 1 GHz (= 16 Gbps / 16 bits). If the bus width for read from the elastic buffer 53 and the bus width for write to the transmission gear box 73 is 20 bits, pcs_clock is 0.8 GHz (= 16 Gbps / 20 bits). If the bus width for write to the serializer 71 is 16 bits, tx_p_*_clock is 1 GHz. Further, since rx_p_*_clock is proportional to an oscillator in the connected port, some clock frequency difference is present.

Since pcs_clock is proportional to the I/F speed, pcs_clock is dependent on the serial bus path in the system even if the I/F speed is targeted at a maximum of 16 Gbps and a pcs internal circuit can operate at 0.8 GHz at maximum. For example, when the I/F speed is 12 Gbps or 8 Gbps, pcs_clock is 0.6 GHz or 0.4 GHz.

In FIGS. 27 and 28, the detailed configurations are depicted only for the lane 0 block. The lane 1 to lane 7 blocks have configurations similar to that of the lane 0 block.

As depicted in FIG. 27, the receiver 52 converts at deserializer a signal input as 1 bit data from the serial I/F into 16-bit data, detects 20-bit boundaries from the 16-bit data, and writes the data such that the data is read in 20-bit boundary unit on the read side of the elastic buffer 53. After reading from the elastic buffer 53, conversion from 10B to 8B and descrambling are carried out. From the reception data read from the elastic buffer 53, a clock frequency difference compensation pattern and a deskew pattern are detected. After completion of a deskew, read control is performed by the reception controller 55. A training pattern is identified by the training pattern receiver 64, and an initialization sequence is controlled. Write to the elastic buffer 53 is carried out on rx_p_*_clock, while pcs_clock is used for read from the elastic buffer 53. The RX-FIFO 56 absorbs the transfer speed difference between the I/F speed and core_clock.

Note that the transmitter 72 sends a training pattern to the scrambler 77 during an initialization sequence. During the initialization, regardless of whether a packet is being sent, a clock frequency difference compensation pattern is transmitted in every 1666 cycles. After the initialization is completed, a packet is transmitted, and core_clock is converted to pcs_clock in TX-FIFO 75. At this time, a packet is controlled so as not to include any clock frequency difference compensation pattern. The packet undergoes scrambling and conversion from 8B to 10B, and is written to the transmission gear box 73. The data to be transmitted is converted from 20-bit width to 16-bit width by the transmission gear box 73, and pcs_clock is converted to tx_p_*_clock. The 16-bit data output from the transmission gear box 73 is converted into 1-bit data in the serializer 71 and is sent from the I/F.

Unlike the configuration depicted in FIGS. 27 and 28, in the configuration of an example of the present embodiment depicted in FIGS. 12 and 13, pcs_clock is not used and the RX-FIFO 56 and the TX-FIFO 75 for absorbing the transfer speed difference are omitted. In the configuration of an example of the present embodiment, the speed difference is absorbed by an elastic buffer 153 and a transmission gear box 173.

In the reception circuit 52 without employing elastic buffers 153 of the present embodiment, the transfer speed difference is absorbed, not in the reception circuit 52, but in the RX-FIFO 56. Hence, the reception circuit 52 operates on pcs_clock, which is dependent on the I/F speed and is equal to or slower than core_clock.

As described above, a reception apparatus can be provided, which is not dependent on the I/F speed and operates on core_clock are provided, thereby improving the latency by omitting FIFOs that have been used for converting from pcs_clock to core_clock.

In addition, since FIFOs that have been used for converting from pcs_clock to core_clock are omitted in an example of an embodiment, the circuit configuration can be simplified.

### (C) Miscellaneous

The examples of the embodiment may be modified in various manners without departing from the concept of the examples of the embodiment.

For example, although an example of an embodiment has been described with reference to the particular configuration having five ports and eight lanes, the numbers of ports and/or lanes may be modified where appropriate.

In addition, the bit widths of the signals may be modified where appropriate.

For example, the function of each configuration block described above may be divided into multiple blocks, or multiple functional blocks may be combined into a single block.

Each configuration block described above may be embodied by hardware, such as circuits, or by firmware, software, or any combination thereof.

Further, the orders of the steps in the flowcharts may be modified where appropriate.

In accordance with the present disclosure, the latency in communications between apparatuses can be reduced.

## Claims

1. A reception apparatus (152) that receives data from a transmission apparatus (172) through a plurality of lanes, the reception apparatus (152) comprising:
a plurality of buffers (153-0 to 153-7) that store received data, each of the plurality of buffers (153-0 to 153-7) being provided for each of the plurality of lanes;
a speed difference controller (175) that outputs a first timing signal for adjusting timing among the plurality of lanes, based on a communication speed on the lanes and operational clocks for the transmission apparatus (172) and the reception apparatus (152);
a deskew controller (160) that outputs a second timing signal for adjusting a skew among the plurality of lanes; and
a controller (155) that adjusts timing for reading the received data from the plurality of buffers (153-0 to 153-7), based on a value of the second timing signal and a difference between a read position for reading the received data from the buffers and a write position for writing the received data to the buffers, in the first timing signal, upon adjusting a frequency difference between the transmission apparatus (172) and the reception apparatus (152).

2. The reception apparatus (152) according to claim 1, wherein
the controller (155) adjusts timing for reading the received data from the plurality of buffers (153-0 to 153-7), based on a difference signal indicating a difference between the read position and the write position of the buffer for each lane,
when it is indicated that the difference signal in at least one of the plurality of lanes is smaller than a predetermined value, the controller (155) outputs a first control signal for suppressing the read position from being incremented, and
when it is indicated that the difference signals in the plurality of lanes is greater than predetermined value, the controller (155) outputs a second control signal for incrementing the read position by two.

3. The reception apparatus (152) according to claim 2, wherein the controller (155) includes a plurality of the predetermined values, and the controller (155) modifies timing for outputting the first and second control signals depending on a magnitude of the difference signal.

4. The reception apparatus (152) according to claim 2 or 3, wherein
the controller (155) increments the read position of the buffers by one or two, based on the second control signal and the first timing signal.

5. An information processing apparatus (101) comprising:
a transmission apparatus (172);
a reception apparatus (152) that receives data from the transmission apparatus (172) through a plurality of lanes; and
a speed difference controller (175) that outputs a first timing signal for adjusting timing among the plurality of lanes, based on a communication speed on the lanes and operational clocks for the transmission apparatus (172) and the reception apparatus (152),
the reception apparatus (152) comprising:
a plurality of buffers (153-0 to 153-7) that store received data, each of the plurality of buffers (153-0 to 153-7) being provided for each of the plurality of lanes;
a deskew controller (160) that outputs a second timing signal for adjusting a skew among the plurality of lanes; and
a controller (155) that adjusts timing for reading the received data from the plurality of buffers (153-0 to 153-7), based on a value of the second timing signal and a difference between a read position for reading the received data from the buffers and a write position for writing the received data to the buffers, in the first timing signal, upon adjusting a frequency difference between the transmission apparatus (172) and the reception apparatus (152),
the transmission apparatus (172) comprising second buffers that store data to be transmitted in the first timing signal, each of the second buffers being provided for each of the plurality of lanes.

6. The information processing apparatus (101) according to claim 5, wherein
the controller (155) adjusts timing for reading the received data from the plurality of buffers (153-0 to 153-7), based on a difference signal indicating a difference between the read position and the write position of the buffer for each lane,
when it is indicated that the difference signal in at least one of the plurality of lanes is smaller than a predetermined value, the controller (155) outputs a first control signal for suppressing the read position from being incremented, and
when it is indicated that the difference signals in the plurality of lanes is greater than predetermined value, the controller (155) outputs a second control signal for incrementing the read position by two.

7. The information processing apparatus (101) according to claim 6, wherein the controller (155) includes a plurality of the predetermined values, and the controller (155) modifies timing for outputting the first and second control signals depending on a magnitude of the difference signal.

8. The information processing apparatus (101) according to claim 6 or 7, wherein
the controller (155) increments the read position of the buffers by one or two, based on the second control signal and the first timing signal.

9. A method of receiving data from a transmission apparatus (172) to a reception apparatus (152) through a plurality of lanes, the method comprising:
outputting a first timing signal for adjusting timing among the plurality of lanes, based on a communication speed on the lanes and operational clocks for the transmission apparatus (172) and the reception apparatus (152);
outputting a second timing signal for adjusting a skew among the plurality of lanes;
detecting a frequency difference between the transmission apparatus (172) and the reception apparatus (152); and
upon the detecting, adjusting timing for reading the received data from a plurality of buffers (153-0 to 153-7) that store received data, each of the plurality of buffers (153-0 to 153-7) being provided for each of the plurality of lanes, based on a value of the second timing signal and a difference between a read position for reading the received data from the buffers and a write position for writing the received data to the buffers, in the first timing signal.

10. The method according to claim 9, further comprising:
adjusting timing for reading the received data from the plurality of buffers (153-0 to 153-7), based on a difference signal indicating a difference between the read position and the write position of the buffer for each lane;
when it is indicated that the difference signal in at least one of the plurality of lanes is smaller than a predetermined value, outputting a first control signal for suppressing the read position from being incremented, and
when it is indicated that the difference signals in the plurality of lanes is greater than predetermined value, outputting a second control signal for incrementing the read position by two.

11. The method according to claim 10, wherein a plurality of the predetermined values are provided, and the method further comprises modifying timing for outputting the first and second control signals depending on a magnitude of the difference signal.

12. The method according to claim 10 or 11, further comprising
incrementing the read position of the buffer by one or two, based on the second control signal and the first timing signal.
